# EUROPEAN PATENT APPLICATION

(11) **EP 1 155 903 A2**
(43) Date of publication of application: **21.11.2001**
(21) Application number: 00123549.8
(22) Date of filing: 27.10.2000
(51) Int. Cl.: B60N 3/02

(54) **Retractable assist grip and mounting method thereof**

(30) Priority: 18.05.2000 JP 2000146413; 26.06.2000 JP 2000190776
(71) Applicant: Nishikawa Kasei Co., Ltd., Hiroshima-shi, Hiroshima 731-0223 (JP)
(72) Inventor: Miho, Sugumune, c/o Nishikawa Kasei Co., Ltd., Hiroshima-shi, Hiroshima 731-0223 (JP); Noda, Hozumi, c/o Nishikawa Kasei Co., Ltd., Hiroshima-shi, Hiroshima 731-0223 (JP)
(74) Representative: Gossel, Hans K., Dipl.-Ing.

(57) **Abstract**

In a retractable assist grip in which a grip body **1** rotatably supported on a mount **7** is urged into swing motion from the use position to the retracted position, one side surface of a supporting part **11** of the mount **7** is formed integrally with s fulcrum pin **12** extending therefrom. A pin support **3** of a leg **1a** of the grip body **1** is journaled on the fulcrum pin **12.** On the other side surface of the supporting part **11**, a recess **13** and a loose-fit pin **14** extending inside the recess **13** from the bottom of the recess are formed coaxially with the fulcrum pin **12.** The leg **1a** of the grip body **1** is assembled against relative rotation with a spacer **18** rotatably inserted into the recess **13** and including a pin loose-fitting part **22** for loosely receiving the loose-fit pin **14** therein. A viscidity **L** is provided between the outer periphery of the spacer **18** and the inner periphery of the recess **13** of the mount **7,** thereby forming a damper **23.** Further, a locking pin **123** is retained prior to the mounting of the grip body 1 to the mount **103A.** With the mount body **109** engaged to the periphery of a mounting hole **p1** of an inner panel **P** from the front side thereof, the locking pin **123** is moved opposite to a direction of insertion thereof by the swing motion of the grip body **1** to the use position so that an extension **129** at the distal end of the locking pin **123** is retained at a locking position, thereby holding flexible engaging pieces **119** extending from the back of the mount body in engagement on the periphery of the mounting hole **p1.**

## Description

### Technical Field

This invention relates to a retractable assist grip for a car body, which is retracted from its use position to its retracted position when it is not in use, and a mounting method thereof, and more particularly relates to pivotal type one which is retractable so as to be swung to its retracted position.

### Background Art

There is known a conventional retractable assist grip of such kind, for example, as disclosed in Japanese Patent Application Laid-Open Gazette No. 9-263166. In this case, respective pairs of extensions are provided on each leg of a U-shaped grip body and each corresponding part of a car body, and one pair of extensions, extending from one of the legs of the grip body or the corresponding part of the car body, are interposed between the other pair of extensions. In addition, coaxial holes are formed over the two pairs of extensions, and a damper, which is formed of an outer cylinder and an inner pin inserted into the outer cylinder and in which a high-viscosity viscidity is encapsulated, is inserted into the coaxial holes. And, the outer cylinder and the inner pin of the damper are fixed to the two pairs of extensions, one located on the grip body side and the other located on the carbody side, respectively. Thus, when the grip body is swung from use to retracted position, it is urged against the swing motion by the viscosity of the viscidity in the damper thereby reducing its swinging speed.

When the swing motion of the grip body toward the retracted position is slowed down in the above manner, the grip body slowly moves from use to retracted position. Therefore, it is prevented that the grip body immediately moves to the retracted position and hits the car body hard to cause a beating sound. This provides a desired upscale image to the assist grip.

As another example of conventional pivotal type retractable assist grips, there is known an assist grip in which one leg of the grip body is supported to a bearing member through a support pin, as disclosed in Japanese Patent Application Laid-Open Gazette No. 5-96982. In this assist grip, the support pin is contacted with a frictional brake made of viscoelastic resin material. When the grip body is swung from use to retracted position, it is given sliding resistance by the frictional brake thereby reducing its swinging speed.

The former conventional example (Japanese patent Application Laid-Open Gazette No. 9-263166) can provide improved quality appearance and durability. However, in this example, since the damper formed of the outer cylinder and the inner pin is fitted as a pin into holes through the pairs of extensions of the grip body and the car body, the number of components forming the damper mechanism becomes increased, which invites a rise in cost.

On the other hand, in the latter conventional example (Japanese Patent Application Laid-Open Gazette No. 5-96982), it is necessary to provide, in the bearing member, a frictional brake for contacting the support pin therewith. This increases the number of components for the dampingmechanism. In addition, since the swing motion of the grip body is damped by sliding resistance, this makes it difficult to give an upscale image to the swing motion and may cause a drop in durability due to friction.

Alternatively, there is a retractable assist grip easily and readily mountable to an inner panel of a car body, for example, as disclosed in U.S. Patent No.4,981,322. In this assist grip, a pair of mount bodies are each formed with a through hole and a pair of flexible engaging pieces each having a pawl at the distal end thereof are extended from the periphery of the through hole on the back of each mount body.

In mounting this assist grip to the inner panel, the mounts are presented to corresponding mounting holes of the inner panel, the pairs of flexible engaging pieces are inserted into the mounting holes, respectively and the mount bodies are caused to abut on the peripheries of the corresponding mounting holes of the inner panel from the front side of the inner panel. Then, locking pins are inserted into the through holes of the mound bodies from the front side of the inner panel, respectively, and in this state, the grip body is swung in its retracted direction to press the locking pins into the corresponding through holes of the mount bodies. Each of the pressed locking pins pushes the pair of flexible engaging pieces apart from each other so that the pawls of the flexible engaging pieces are engaged on the periphery of the mounting hole of the inner panel from the back side thereof . Thus, the inner panel is secured in sandwich relation between the mount bodies and the pawls.

Meanwhile, for retractable assist grips, the grip body and the mounts are separate parts. Therefore, if the grip body and the mounts are carried individually into a car body assembly line and then mounted to the inner panel, this increases the number of assembly man-hours in the car body assembly line. Accordingly, the grip body and the mounts are generally carried, into the car body assembly line, in a semi-assembled condition where, as in the above conventional case, the locking pins are inserted halfway into the corresponding through holes of the mount bodies.

However, when the locking pins are kept inserted halfway into the through holes of the mount bodies, some factor may cause the locking pin to be fully pressed into or dropped out of the through hole of the mount body before the mounts are carried in the car body assembly line.

Once the locking pin has been fully pressed into the through hole, the assist grip in this state is no longer mountable to the inner panel since both the pawls are pushed apart from each other beyond the aperture of the mounting hole. In this case, though the locking pin should be pulled out of the through hole, the pulling of the locking pin is an extremely difficult work since the locking pin is forcibly pressed into the through hole, .

On the other hand, if the locking pin has been dropped out of the through hole, it may be lost, which makes it impossible to assemble the assist grip to the car body in the car body assembly line. Such an event constitutes a serious impediment to a smooth flow of the car body assembly line and therefore should be absolutely avoided.

A first object of the present invention is to improve a damper mechanism of a pivotal type retractable assist grip that uses a damper in which a high-viscosity viscidity is encapsulated, and more specifically not only to slow down the swing motion of the assist grip to its retracted position by an excellent damping effect of the damper in which the viscidity is encapsulated but also to reduce the number of components of the assist grip thereby resulting in cost reduction.

A second object of the present invention is to avoid any impediment to the mounting of the assist grip to a fixed body such as a car body panel by preventing the locking pin from moving to its locking position before the carriage of the assist grip into the assembly line and from dropping out of the through hole of the mount body.

### Disclosure of Invention

To achieve the first object, in the present invention, an assist grip is configured such that a damper, in which the above-mentioned high-viscosity viscidity is encapsulated, is incorporated together with a grip body and a mount.

Specifically, the present invention is directed to a retractable assist grip including: a pair of mounts fixed to a fixed body such as a car body; a grip body pivotally mounted for swing motion at legs thereof onto the mounts, respectively; and urging means, provided between at least one of the legs of the grip body and the corresponding mount, for urging the grip body into swing motion from its use position to its retracted position.

Further, at least one of the pair of mounts includes a fulcrum pin extended integrally from one side thereof, a recess formed coaxially with the fulcrum pin on the opposite side of the mount, and a loose-fit pin extended integrally from the inner bottom toward the opening of the recess and coaxially with the fulcrum pin. Furthermore, the leg of the grip body is formed with a pin support journaled on the fulcrum pin. In addition, the leg of the grip body is assembled against relative rotation with a spacer rotatably inserted into the recess of the mount and including a pin loose-fitting part for loosely receiving the loose-fit pin therein, and a viscidity is provided in a space between the outer periphery of the spacer and the inner periphery of the recess of the mount.

With this arrangement, when the grip body swings with respect to the mount having the fulcrum pin, the pin support in the leg of the grip body rotates about the fulcrum pin of the mount and the spacer assembled against relative rotation with the leg of the grip body rotates about the loose-fit pin within the recess of the mount. Since the viscidity is provided in the space between the inner periphery of the recess of the mount and the outer periphery of the spacer, a damper is formed by the mount and the spacer fitted on the grip body side. The viscosity of the viscidity in the damper produces resistance against the rotation of the spacer, so that the grip body can swing slowly. This provides an upscale image to the swing motion.

Further, since the grip body is supported to the mount having the fulcrum pin such that the pin support of the leg of the grip body is journaled on the fulcrum pin of the mount and the spacer fitted on the grip body side is inserted into the recess of the mount, the assist grip can be built up from the urging means, the grip body, the mount and the spacer only. Accordingly, the number of components of the assist grip is reduced than that of the conventional one, which achieves cost reduction. In addition, since the damper is accommodated in the grip body, the appearance of the assist grip can be improved.

The viscidity is preferably also provided in a space between the inner periphery of the pin loose-fitting part of the spacer and the outer periphery of the loose-fit pin of the mount. In this case, when the grip body swings with respect to the mount, resistance against the swing motion produces not only by the viscosity of the viscidity in the space between the inner periphery of the recess of the mount and the outer periphery of the spacer but also by the viscosity of the viscidity in the space between the inner periphery of the pin-loose-fitting part of the spacer and the outer periphery of the loose-fit pin. The increase in resistance against the swing motion resulting from the viscidity of both the parts further increases the damping effect. In addition, since the parts for giving resistance against the swing motion by the viscidity are disposed in two layers around the rotational axis, the axial length of the damper can be shortened correspondingly.

Alternatively, a retractable assist grip of the present invention may be arranged as follows: In the retractable assist grip directed in the above manner, at least one of the pair of mounts is formed of first and second mounts; a leg of the grip body is assembled into unitary rotation with a fulcrum pin supported to the first mount; the grip body is formed with a spacer fitting part formed of a concavity coaxial with the fulcrum pin, the fulcrum pin extending inside the spacer fitting part toward the opening thereof; the second mount includes a spacer part rotatably fitted into the spacer fitting part and provided with a recess for loosely receiving the fulcrum pin extending inside the spacer fitting part therein; and a viscidity is provided at least between the outer periphery of the spacer part of the second mount and the inner periphery of the spacer fitting part of the grip body.

With this arrangement, when the grip body swings, the fulcrum pin assembled into unitary rotation with the leg of the grip body rotates with respect to the first mount and the grip body rotates around the second mount the spacer part of which is inserted into the spacer fitting part. At the time, since the viscidity is provided between the outer periphery of the spacer part of the second mount and the inner periphery of the spacer fitting part of the grip body, a damper is formed between the spacer part of the second mount and the grip body. The viscosity of the viscidity in the damper produces resistance against the swing motion of the grip body thereby swinging the grip body slowly. This provides an upscale image to the swing motion.

In addition, since the grip body is supported to the two mounts through the fulcrum pin, the assist grip can be built up from the grip body, the fulcrum pin, the two mounts and the urging means only. This reduces the number of components of the assist grip, resulting in cost reduction. Also, since the damper is accommodated in the grip body, the appearance of the assist grip can be improved.

A sealing member may be provided in one of a portion of the inner periphery of the recess of the amount in the vicinity of the open end of the recess and a corresponding portion of the outer periphery of the spacer, and a sealing surface engaging against the sealing member may be provided in the other so that the engagement of the sealing member against the sealing surface seals from the outside at least the space between the outer periphery of the spacer and the inner periphery of the recess of the mount. In addition, the sealing member may be placed, when the spacer is inserted into the recess of the mount and the viscidity is filled with at least the space between the outer periphery of the spacer and the inner periphery of the recess of the mount while expelling air from the space, to form a seal with the sealing surface by engagement against the sealing surface with the air in the space substantially fully expelled.

The sealing member may be placed, when the spacer is fully inserted into the recess of the mount, on a portion of the sealing surface closer to the opening of the recess than the center of the sealing surface in a direction of insertion of the sealing member.

With the above sealing structures, when the spacer is inserted into the recess of the mount and the viscidity is filled with at least the space between the outer periphery of the spacer and the inner periphery of the recess of the mount while expelling air from the space, the air in the space can be expelled as much as possible to fill the space with substantially the viscidity alone. This enhances the damping effect of the viscidity.

More specifically, when a seal is formed by engaging the sealing member against the sealing surface, the sealing member is generally placed on the centre of the sealing surface . However, if the sealing member is placed on a portion of the sealing surface closer to the opening of the recess than the centre of the sealing surface in a direction of insertion of the sealing member like the invention as claimed in Claim 4, a seal formation of the sealing member is delayed in inserting the spacer into the recess of the mount and the air in the space can be correspondingly much expelled to fill the spaces with substantially the viscidity alone.

A first restriction may be extended on the outer periphery of the spacer so as to be opposed to and spaced a predetermined clearance apart from the inner periphery of the recess of the mount, a second restriction may be extended on the inner periphery of the recess of the mount so as to be opposed to and spaced a predetermined clearance apart from the outer periphery of the spacer, and the first and second restrictions may be placed at positions to allow the swing motion of the grip body between the use position and retracted position.

With this arrangement, when the grip body automatically swing from its use position to retracted position by the bias of the urging means, the viscidity located in a zone between the first restriction on the outer periphery of the spacer and the second restriction on the inner periphery of the recess of the mount is pressurised by both the restrictions. The viscidity in the zone flows while being squeezed through the clearance between the first restriction and the inner periphery of the recess of the mount and the clearance between the second restriction and the outer periphery of the spacer. The flow resistances of the viscidity enhance the damping effect to reduce the swinging speed of the grip body, which can further slowly swing the grip body.

A third restriction may be extended on the outer periphery of the loose-fit pin of the mount so as to be opposed to and spaced a predetermined clearance apart from the inner periphery of the pin loose-fitting part of the spacer, a fourth restriction may be extended on the inner periphery of the pin loose-fitting part of the spacer so as to be opposed to and spaced a predetermined clearance apart from the outer periphery of the loose-fit pin of the mount, and the third and fourth restrictions may be placed at positions to allow the swing motion of the grip body between the use and retracted positions.

With this arrangement, when the grip body automatically swing from its use position to retracted position by the bias of the urging means, the viscidity located in a zone between the fourth restriction on the inner periphery of the pin loose-fitting part of the spacer and the third restriction on the outer periphery of the loose fit pin of the mount is pressurised by both the restrictions. The viscidity in the zone flows while being squeezed through the clearance between the fourth restriction and the outer periphery of the loose fit pin of the mount and the clearance between the third restriction and the inner periphery of the pin loose-fitting part of the spacer. As a result, the damping effect of the viscidity is enhanced, which can further slowly swing the grip body.

A plurality of support flanges may be radially extended in circumferentially equally spaced relation on one of a bottom end portion of the inner periphery of the recess of the mount and the outer periphery of the distal end of the spacer so as to relatively slidably engage the other. With this structure, the distal end of the spacer can bear against the mount. This enhances the bearing property of the mount relative to the spacer or the grip body.

To attain the above-mentioned second object, in this invention, a locking pin is pushed in to a larger extent than required to temporarily disengage the coupling between the distal end of the locking pin from engaging pieces, and thereafter the distal end of the locking pin is retained at a locking position between the engaging pieces in cooperation with the swing motion of the grip body to the use position.

More specifically, the invention is directed to a retractable assist grip including an elongated grip body having legs at both lengthwise ends thereof and mounts to which the legs are mounted for swing motion, the grip body being swung between its use and retracted positions with the mounts fixed to a fixed body.

Further, the mount includes : a mount body which is provided with a swing support section for supporting the legs for swing motion and abuts on the periphery of a mounting hole of the fixed body from the front side of the fixed body; a through hole passing through the mount body from front to back thereof; at least two engaging pieces which are extended from the periphery of the through hole on the back of the mount body and inserted into the mounting hole of fixed body to engage on the edge of the mounting hole; and a locking pin having an extension at the distal end thereof, the locking pin being inserted into the through hole from the front side of the mount body prior to the mounting of the grip body to the mount so that the extension passes a locking position between the engaging pieces while pushing the engaging pieces apart from each other, the locking pin being restrained against movement opposite to a direction of insertion thereof into the through hole by the distal ends of the engaging pieces narrowed in distance therebetween by the passage of the extension over the locking position so that the extension is retained at a position having passed over the locking position, the locking pin being moved backward opposite to the direction of insertion thereof by the swing motion of the grip body to the use position in a state that the mount body of the mount to which the grip body is mounted is caused to abut on the periphery of the mounting hole of the fixed body from the front side thereof, the backward movement of the locking pin causing the extension to enter again between the engaging pieces and push the engaging pieces apart from each other so that the extension is retained at the locking position thereby holding the engaging pieces in engagement on the edge of the mounting hole.

With the above structure, when the locking pin is inserted into the through hole of the mount body and the extension at the distal end of the locking pin enters between the engaging pieces while pushing them apart from each other and then passes over the locking position, the engaging pieces are released from the pressing force of the extension to regain its original position of narrow distance. The locking pin is thereby restrained against movement opposite to the direction of insertion thereof so that the extension is retained at a position having passed over the locking position. Accordingly, it can be avoided that some factor may cause the locking pin to move to the locking position before the mounts are carried in the car body assembly line. And, it can be prevented that the locking pin may drop out of the through hole of the mount body, or may be lost.

Further, since the extension of the locking pin is retained at a position having passed over the locking position, the engaging pieces are free from the pressing force of the extension so that the distance between the engaging pieces are narrowed. This enables the engaging pieces to be smoothly inserted into the mounting hole of the fixed body.

Accordingly, lack of parts and a difficult pulling work of the locking pin in the locking position are eliminated. This avoids a serious impediment to a smooth flow of the car body assembly line. In addition, by simply swinging the grip body to the use position, the extension of the locking pin can automatically be inserted between the engaging pieces and the locking pin can be retained at the locking position with the engaging pieces engaged on the edge of the mounting hole. Accordingly, the assist grip can be mounted to the fixed body in a single operation.

A movement assist piece may be extended from the root end of the locking pin, and a pusher may be provided at the bottom end of the leg of the grip body so as to abut on the movement assist piece and move the locking pin opposite to the direction of insertion thereof by the swing motion of the grip body to the use position. This provides a specific mechanism for moving the locking pin to the locking position.

The fixed body may be a car body panel.

Further, a mounting method of a retractable assist grip according to the present invention is directed to a method of mounting a retractable assist grip including an elongated grip body having legs at both lengthwise ends thereof and mounts to which the legs are mounted for swing motion, the grip body being swung between its use and retracted positions with the mounts fixed to a fixed body, and the method comprises the steps of: inserting a locking pin having an extension at the distal end thereof into a through hole of the mount body from the front side thereof so that the extension passes a locking position between at least two engaging pieces extended from the periphery of the through hole on the back of the mount body while pushing the engaging pieces apart from each other, and restraining the locking pin against movement opposite to a direction of insertion thereof into the through hole by the distal ends of the engaging pieces narrowed in distance therebetween by the passage of the extension over the locking position so that the extension is retained at a position having passed over the locking position; and after mounting the grip body to the mount, swinging the grip body to the use position with the mount body caused to abut on the periphery of the mounting hole of the fixed body from the front side thereof and moving the locking pin opposite to the direction of insertion thereof by the swing motion of the grip body to cause the extension to enter between the engaging pieces and push the engaging pieces apart from each other so that the extension is retained at the locking position thereby holding the engaging pieces in engagement on the edge of the mounting hole. According to this method, the assist grip can be mounted to the fixed body so as to exert the above-described effects of the invention.

### Brief Description of Drawings

Figure 1 is an enlarged cross-sectional view taken along the line I-I of Figure 4.
Figure 2 is a plan view of an essential part of an assist grip according to Embodiment 1 of the present invention as seen from the bottom.
Figure 3 is a front view of the essential part of the assist grip in Figure 2.
Figure 4 is a view taken in the direction of the arrow IV of Figure 2.
Figure 5 is a cross-sectional view taken along the line V-V of Figure 2.
Figure 6 is an enlarged front view of a mount.
Figure 7 is an enlarged side view of the mount.
Figure 8 is an enlarged plan view of the mount.
Figure 9 is an enlarged front view of a spacer.
Figure 10 is an enlarged side view of the spacer.
Figure 11 is an enlarged plan view of the spacer.
Figure 12 is an enlarged cross-sectional view taken along the line XII-XII of Figure 13.
Figure 13 is a diagram corresponding to Figure 3, which shows an assist grip of Embodiment 2 of the present invention.
Figure 14 is an enlarged side view of a fulcrum pin.
Figure 15 is an enlarged front view of the fulcrum pin.
Figure 16 is an enlarged plan view of a first mount.
Figure 17 is an enlarged front view of the first mount.
Figure 18 is an enlarged plan view of a second mount.
Figure 19 is an enlarged front view of the second mount.
Figure 20 is a diagram corresponding to Figure 1, which shows an assist grip of Embodiment 3 of the present invention.
Figure 21 is an enlarged cross-sectional view showing an essential part of the assist grip of Embodiment 3.
Figure 22 is an enlarged side view of an end portion of a spacer.
Figure 23 is a diagram corresponding to Figure 1, which shows a mounting structure of one of legs of a grip body in Embodiment 4 of the present invention.
Figure 24 is a diagram corresponding to Figure 1, which shows a mounting structure of the other leg of the grip body.
Figure 25 is a front view showing the grip body in which mounts are mounted to the right- and left-hand legs in Embodiment 4.
Figure 26 is a diagram corresponding to Figure 1, which shows an assist grip of Embodiment 5 of the present invention.
Figure 27 is a cross-sectional view taken along the line XXVII-XXVII of Figure 26.
Figure 28 is a diagram corresponding to Figure 27, which shows that the grip body is in its use position.
Figure 29 is a longitudinal cross-sectional view showing that an assist grip according to Embodiment 6 is mounted to an inner panel.
Figure 30 is a longitudinal cross-sectional view showing that a locking pin is mounted to a mount body.
Figure 31 is a longitudinal cross-sectional view showing that the locking pin and a grip body are mounted to a mount.
Figure 32 is a longitudinal cross-sectional view showing an initial state of the grip body swung to its use position.
Figure 33 is a longitudinal cross-sectional view showing that the assist grip has been mounted to the inner panel by swing motion of the grip body to its use position.
Figure 34 is a bottom view of a leg of the grip body.
Figure 35 is an plan view of the mount body.
Figure 36 is a diagram showing the entire assist grip.

### Modes for Carrying Out the Invention

### (Embodiment 1)

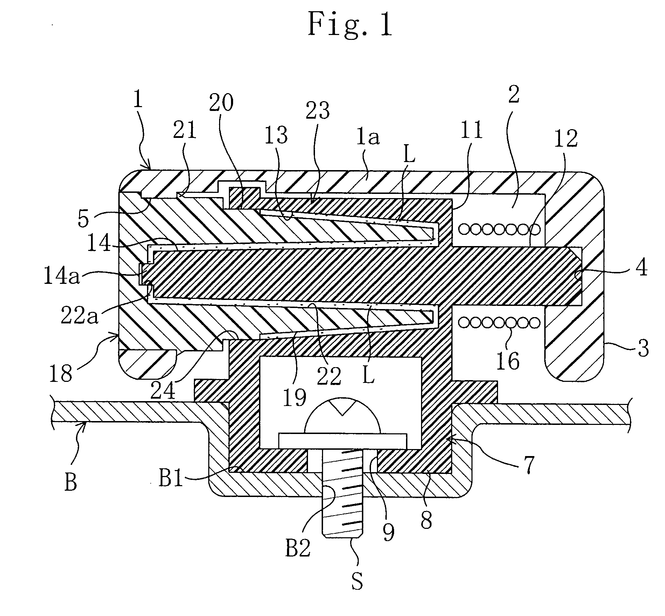

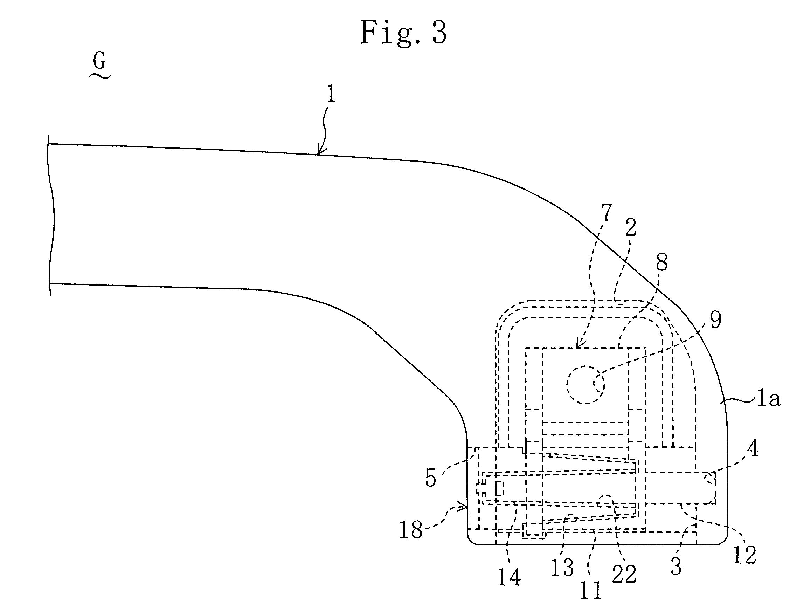

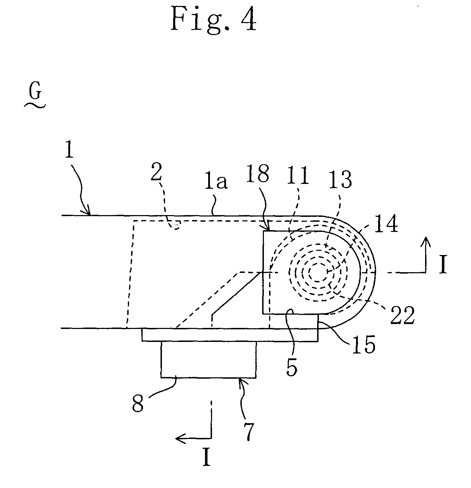

Figures **1** through **5** show a pivotal type retractable assist grip **G** according to Embodiment 1 of the present invention. As shown in these figures, a grip body **1** is curved approximately in the shape of a bracket and is made of polypropylene (PP) for example. The grip body **1** has a pair of legs **1a, 1a** at the lengthwise right and left ends (only the right-hand leg is shown in this embodiment), respectively, and is pivoted at the right-and left-hand legs **1a, 1a** to, for example, a car body (fixed body) **B** forming a vertical sidewall in a room of a vehicle. The pivoted structure thereof at the legs **1a, 1a** allows the grip body 1 to swing between its use position and its retracted position. When the grip body **1** is in the retracted position, the intermediate part thereof directs upwardly to take a position approximately along the vertical plane. On the other hand, when the grip body **1** is in the use position, the intermediate part directs toward the car room to take a position approximately along the horizontal plane.

Specifically, in a state that the grip body **1** is in the retracted position, an accommodating section **2** is formed on the back of one of the legs, e.g., the right-hand leg **1a** (or the left-hand leg **1a**), (on the side opposed to the car body **B**) so as to be constituted by a cavity cut out in an approximately rectangular shape upwardly from the bottom surface of the grip body **1.** Out of two laterally opposed sidewalls of the accommodating section **2,** an outer sidewall located far from the lateral centre of the grip body **1** (right-hand sidewall in Figure **1**) is formed into a pin support **3.** A bottomed circular support bore **4** is formed in the inside surface of the pin support **3.** On the other hand, an inner sidewall of the accommodating section **2,** located closer to the lateral centre of the grip body **1** (left-hand sidewall in Figure **1**), has a spacer fitting hole **5** having a half-round lower part and a rectangular upper part and formed through the inner sidewall such that the centre of the half circle of the lower part is aligned with the centre of the support bore **4.**

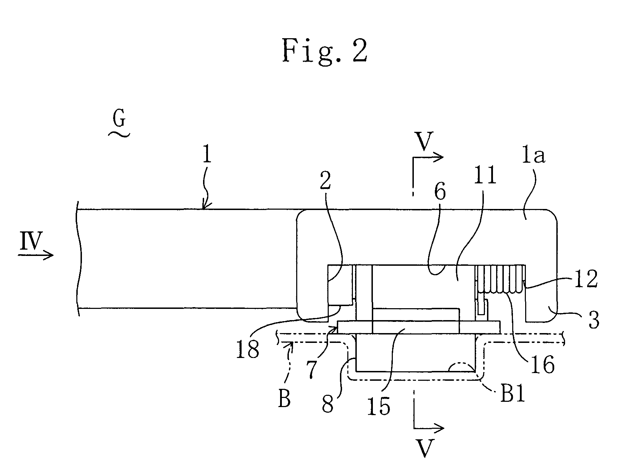

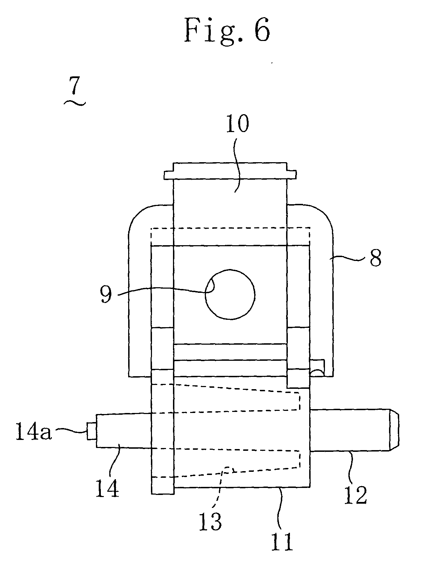

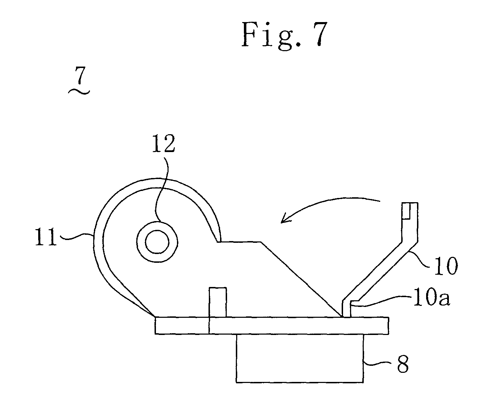

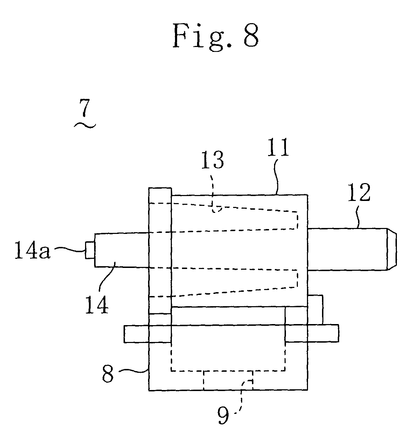

In the accommodating section **2** of the grip body **1,** part of a mount **7,** which is made of polyacetal (POM) or the like and secured to the car body **B,** is disposed and contained. As shown in Figures **6** through **8,** the mount **7** has a bottomed box-shaped fixing part **8** of rectangular section with a front aperture. The bottom of the fixing part **8** has a screw free-receiving hole **9** formed therethrough. As shown in Figures **1** and **2,** the mount **7** is fixed to the car body **B** by fitting the bottom of the fixing part **8** of the mount 7 into a rectangular mounting recess **B1** formed in the car body **B** and threading a screw **S,** having passed through the screw free-receiving hole **9** at the bottom of the fixing part **8,** into a screw hole **B2** formed at the bottom of the mounting recess **B1.** An upper edge of the aperture of the fixing part **8** is provided integrally with a hinged type cover **10** for opening and closing the aperture. The above-mentioned threading work using the screw **S** is made with the cover **10** open, and thereafter, the cover **10** is closed to cover the aperture of the fixing part **8** thereby hiding the screw **S.**

At the front side of the fixing part **8** of the mount **7,** a supporting part **11** is integrally formed so as to be offset below from the fixing part **8** (on the side opposite to a hinged part **10a** of the cover **10**). Out of laterally opposite side surfaces of the supporting part **11,** one side surface facing the pin support **3** of the grip body **1** is formed integrally with a fulcrum pin **12** extending from the one side surface. On the other side surface of the supporting part **11,** a recess **13,** formed of a tapered hole diminishing its inner diameter toward the fulcrum pin **12** (toward its bottom), is formed coaxially with the fulcrum pin **12.** A tapered loose-fit pin **14** is extended integrally from the bottom of the recess **13** and coaxially with the fulcrum pin **12** to pass the inside of the recess **13** toward the opening thereof. The root end of the tapered loose-fit pin **14** has a diameter substantially equal to that of the fulcrum pin **12.** The loose-fit pin **14** extends beyond the opening of the recess **13,** and the distal end portion thereof is extended and formed integrally into a small-diameter pivot pin **14a** forming a level difference with the remaining portion of the loose-fit pin **14.**

As shown in Figure **1,** the distal end portion of the fulcrum pin **12** of the mount **7** is rotatably inserted into the support bore **4** of the pin support **3** in the right-hand leg **1a** of the grip body **1.** Under this configuration, the grip body **1** is supported at the pin support **3** of the right-hand leg **1a** for swing motion on the fulcrum pin **12** of the mount **7.**

A torsion coil spring **16** as an urging means is disposed around the fulcrum pin **12** of the mount **7.** The spring **16** is anchored at one end thereof on the pin support **3** of the grip body **1** and at the other end on the fixing part **8** of the mount **7.** The grip body **1** is urged into swing motion from the use position toward the retracted position by the torque of the spring **16.**

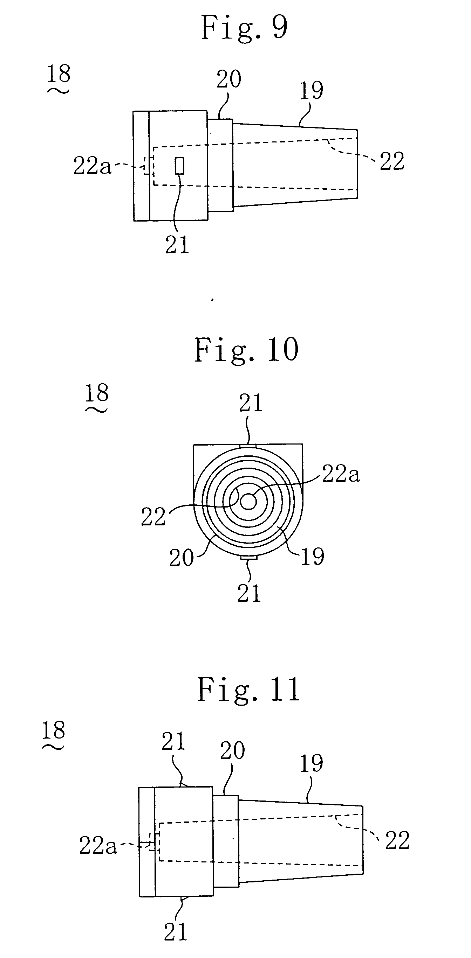

A bottomed spacer **18** in substantially cylindrical form is fixedly mounted against rotation in the spacer fitting hole **5** of the right-hand leg **1a** of the grip body **1.** The end portion of the spacer **18** is inserted rotatably in the recess **13** of the mount **7.** In detail, as shown in Figures **9** through **11,** the end portion of the spacer **18** is composed of a tapered insert part **19** and a sealing part **20** of larger diameter extending radially outwardly from the root end of the insert part **19** to form a level difference therebetween. As shown in Figure **1,** when the insert part **19** is inserted into the recess **13** of the mount **7,** a tapered cylindrical space of substantially uniform clearance is defined between the outer periphery of the insert part **19** and the inner periphery of the recess **13.** This space between the outer periphery of the insert part **19** and the inner periphery of the recess **13** is provided by previously diminishing the diameter of the outer periphery of the insert part **19** in a manner of radially inwardly cutting it to form a level difference thereon. Alternatively, the space may be provided by previously increasing the diameter of the inner periphery of the recess **13** in a manner of radially outwardly cutting it to form a level difference thereon. In the vicinity of the open end of the recess **13** of the mount **7,** a sealing surface **24** is formed of a cylindrical surface parallel with the axis of the recess **13.** The sealing part **20** of the spacer **18** can be fitted into the recess **13** at the sealing surface **24** in liquid-tight manner by engagement with the sealing surface **24.** Through the engagement with the sealing surface **24,** the sealing part **20** closes the open end of the recess **13** so as to allow rotation relative to the sealing surface **24,** and seals the space between the outer periphery of the insert part **19** and the inner periphery of the recess **13** and a space between the inner periphery of the hereinafter described pin loose-fitting part **22** and the outer periphery of the loose-fit pin **14** of the mount **7.**

The root end portion of the spacer **18** has the same contour (half-round at one end and rectangular at the other end) as that of the spacer fitting hole **5** of the right-hand leg **1a** of the grip body **1.** The fitting of the root end portion into the spacer fitting hole **5** holds the spacer **18** against rotation in the spacer fitting hole **5.** A pair of clicks **21, 21** protrudes from diametrically opposite positions on the outer periphery of the root end portion of the spacer **18.** On inserting the spacer **18** into the spacer fitting hole **5,** the clicks **21** are engaged with the inside surface of the right-hand leg **1a** of the grip body **1** so that the spacer **18** is securely held against movement off from the spacer fitting hole **5.**

The spacer **18** is internally formed with the pin loose-fitting part **22** tapered and formed of a bottomed hole extending from the distal end thereof. A bore **22a** is formed coaxially at the bottom of the pin loose-fitting part **22.** As shown in Figure 1, the loose-fit pin **14** of the mount **7** is loosely fitted into the pin loose-fitting part **22** so as to allow relative rotation of the spacer **18,** and the pivot pin **14a** of the loose-fit pin **14** is fitted into the bore **22a.** In these fitting conditions, a tapered cylindrical space of substantially uniform clearance is defined between the outer periphery of the loose-fit pin **14** and the inner periphery of the pin loose-fitting part **22.**

The space between the outer periphery of the insert part **19** of the spacer **18** and the inner periphery of the recess **13** is communicated with the space between the outer periphery of the loose-fit pin **14** of the mount **7** and the inner periphery of the pin loose-fitting part **22** of the spacer **18.** A viscidity **L** made of a liquid such as a silicon of high viscosity (preferably, 100,000 cps or more) is filled in and lies between both the spaces. The recess **13** and the loose-fit pin **14** of the mount **7,** the insert part **19** and the pin loose-fitting part **22** of the spacer **18,** and the viscidity **L** in the spaces form a damper **23** for generating torque providing resistance to swing motion of the grip body **1.**

The load acting on the grip body **1** of the assist grip **G** in passenger's use is distributed into three parts, i.e., the fulcrum pin **12** of the mount **7** fitted in the pin support **3** of the grip body **1,** the open end portion (sealing surface **24**) of the recess **13** of the mount **7** fitted on the sealing part **20** of the spacer **18** and the pivot pin **14a** of the mount **7** fitted in the bore **22a** of the spacer **18,** and is then transmitted to the mount **7.** This prevents breakage of the pin support **3** of the grip body **1** and the mount **7** and so on due to a concentrated load.

Alternatively, the load acting on the grip body **1** may not necessarily be distributed into the above-mentioned three parts in the mount **7,** and may be distributed into two parts, i.e., the fulcrum pin **12** and the pivot pin **14a** of the mount **7,** or the fulcrum pin **12** and the open end portion of the mount **7.**

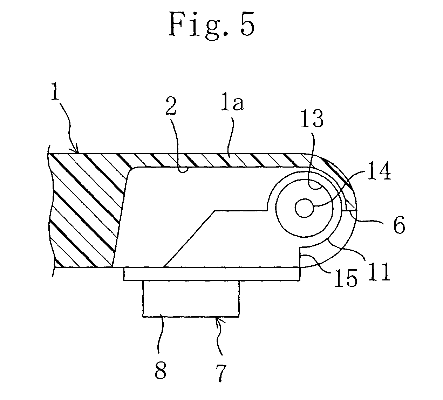

As shown in Figure **5,** an abutment portion **6** is formed at the lower end of the opening of the accommodating section **2** in the right-hand leg **1a** of the grip body **1,** and the fixing part **8** of the mount **7** is formed with a stop **15** abuttable on the abutment portion **6.** On swinging the grip body **1** from retracted to use position, the abutment portion **6** abuts on the stop **15** of the fixing part **8** of the mount **7** so that the grip body **1** is constrained to stop at the use position.

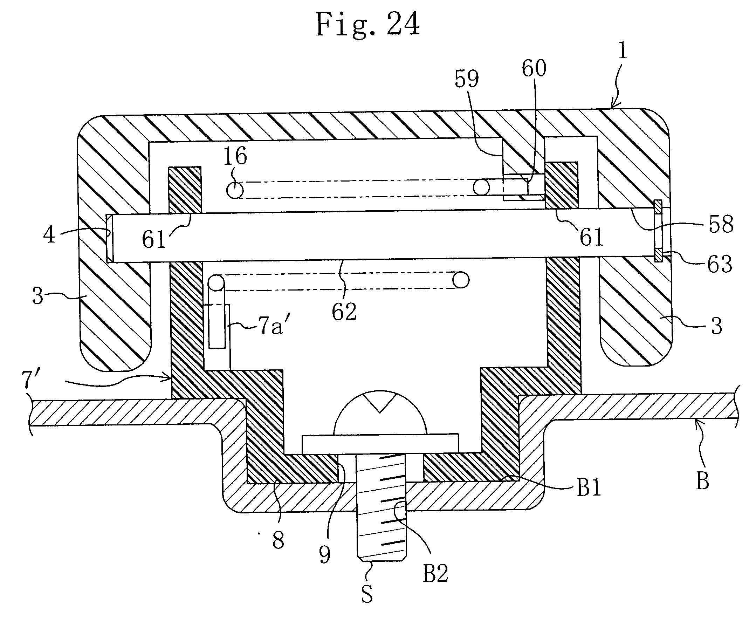

The left-hand leg **1a** as the other leg of the grip body **1** is provided with neither spring **16** nor damper **23** as in the right-hand leg **1a,** though it is not shown. The left-hand leg **1a** is supported for swing motion through a fulcrum pin alone to a mount fixed to the car body **B** (wherein the mechanism of fixing this mount to the car body **B** uses a screw like the fixing of the mount **7** for mounting the right-hand leg **1a** on the car body **B**). Specifically, this mechanism is the same as that a torsion coil spring **16,** a spring abutment **7a'** and a spring anchor lug **59** are removed from the mechanism shown in Figure **24** in Embodiment 4 described later.

In assembling the assist grip **G** of this embodiment with the car body **B,** for the right-hand leg **1a** of the grip body **1,** the torsion coil spring **16** is first disposed around the fulcrum pin **12.** Then, both ends of the torsion coil spring **16** are anchored on the grip body **1** and the mount **7,** respectively, while the end of the fulcrum pin **12** is inserted into the support bore **4** of the pin support **3** of the grip body **1.** Subsequently, the spacer **18** is inserted into and fixed to the spacer fitting hole **5** of the right-hand leg **1a** of the grip body **1** in a manner of inserting the insert part **19** thereof into the recess **13** of the mount **7** while loosely fitting the loose-fit pin **14** of the mount **7** into the pin loose-fitting part **22.** Further, prior to the assembly of the spacer **18,** a desired amount of viscidity **L** is filled into both the recess **13** of the mount **7** and the pin loose-fitting part **22** of the spacer **18.** This allows the viscidity **L** to be encapsulated in the respective spaces defined between the outer periphery of the insert part **19** of the spacer **18** and the inner periphery of the recess **13** and between the inner periphery of the pin loose-fitting part **22** of the spacer **18** and the outer periphery of the loose-fit pin **14** of the mount **7,** concurrently with the assembly of the spacer **18.**

The assist grip **G,** having been assembled with the mount **7** in the above manner, is assembled to the car body **B** by passing a screw **S** through the screw free-receiving hole **9** of the fixing part **8** of the mount **7** and fastening the mount **7** to the car body **B** through the screw **S.** Thereafter, the hinged type cover **10** is closed to cover the aperture of the fixing part **8** thereby hiding the screw **S.**

Accordingly, in the assist grip **G** of this embodiment, the grip body **1** is normally urged into swing motion to the retracted position and held in this position by a bias of the torsion coil spring **16.** Then, when the passenger uses the assist grip **G,** he can grasp the grip body **1** and swing it to the use position against the bias of the torsion coil spring **16** present in the right-hand leg **1a.** Further, when the passenger stops the use of the assist grip **G,** if he simply releases the grip body **1,** the grip body **1** automatically returns from use to retracted position while being swung by the bias of the torsion coil spring **16.**

During the swing motion of the grip body **1** from use to retracted position (and also during the swing motion thereof from retracted to use position), the pin support **3** of the right-hand leg **1a** of the grip body **1** rotates around the fulcrum pin **12** of the mount **7,** and the spacer **18,** mounted against rotation in the right-hand leg **1a** of the grip body **1,** rotates in the recess **13** of the mount **7.** At the time, since the viscidity **L** lies in the space between the inner periphery of the recess **13** of the mount **7** and the outer periphery of the insert part **19** of the spacer **18,** the viscosity of the viscidity **L** provides resistance (torque) to the rotation of the spacer **18** and the grip body **1.** In addition, since the viscidity **L** also lies in the space between the inner periphery of the pin loose-fitting part **22** of the spacer **18** and the outer periphery of the loose-fit pin **14** of the mount **7,** the viscosity of the viscidity **L** in this space also provides resistance to rotation. Such resistance at these locations causes the grip body **1** to swing slowly from use to retracted position. As a result, it is prevented that the grip body **1** hits the car body **B** hard to cause a beating sound. And, such slow swing motion provides an upscale image to the assist grip **G.**

Further, since the damper **23** is formed by filling the viscidity **L** into both the spaces between the inner periphery of the recess **13** of the mount **7** and the outer periphery of the insert part **19** of the spacer **18** and between the inner periphery of the pin loose-fitting part **22** of the spacer **18** and the outer periphery of the loose-fit pin **14,** part of the damper **23** which provides rotational resistance is constructed in two layers of different diameters around the axis of rotation. Accordingly, the axial length of the damper **23** can be shortened as compared with a damper having part constructed in a single layer for providing rotational resistance.

Furthermore, the grip body **1** is supported to the mount **7** in such a manner that the pin support **3** of the right-hand leg **1a** is journaled on the fulcrum pin **12** of the mount **7** and the spacer **18** is inserted into the recess **13** of the mount **7.** Therefore, the assist grip **G** is built up from the grip body **1,** the mount **7,** the torsion coil spring **16** and the spacer **18** only. Accordingly, the number of components of the assist grip **G** can be reduced, resulting in cost reduction.

In addition, since the damper **23** is accommodated in the grip body **1**, the appearance of the assist grip **G** can be improved.

In this embodiment, the torsion coil spring **16** and the damper **23** are provided only in one leg (right-hand leg) **1a** of the grip body **1.** However, they may be provided in both the right-and left-hand legs **1a, 1a.**

### (Embodiment 2)

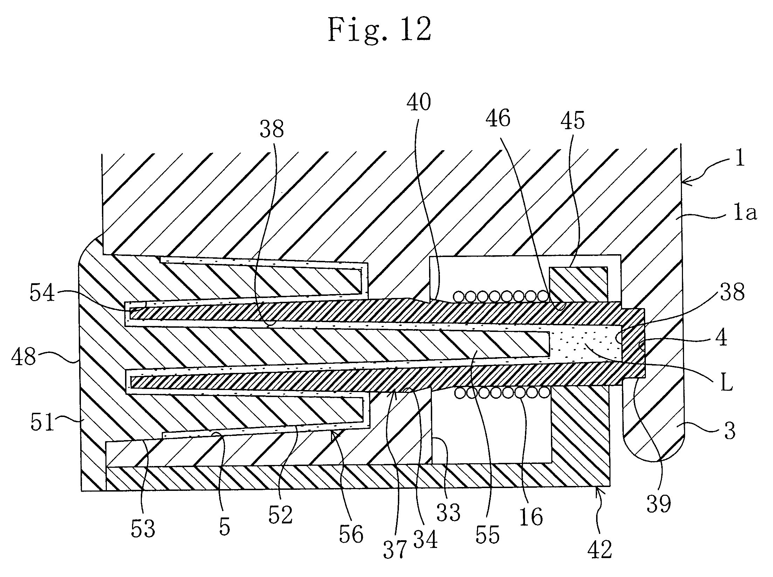

Figures **12** through **19** show Embodiment 2 of the invention. It is to be noted that in each of embodiments described hereinafter, same components as those shown in Figures **1** through **11** are indicated by like reference characters and detailed description thereof will be omitted.

In this embodiment, the right-hand leg (or left-hand leg) **1a** as one of the legs of the grip body **1** in the retracted position is formed with an upper accommodating section **31,** a lower accommodating section **32** located below the upper accommodating section **31** and far from the lateral centre of the grip body **1,** and a spacer fitting part **5** located below the upper accommodating section **31** and closer to the lateral centre of the grip body **1.** The lower accommodating section **32** and the spacer fitting part **5** are separated one from the other by a partition **33.** The upper and lower accommodating sections **31, 32** are cavities formed by recessing the back face of the right-hand leg **1a.** The spacer fitting part **5** is a circular hole formed by recessing the side surface of the right-hand leg **1a** closer to the lateral centre of the grip body **1** and tapering the recessed surface. The bottom of the spacer fitting part **5** is formed of the above-mentioned partition **33.** The outer sidewall of the lower accommodating section **32** is formed into the pin support **3.** The pin support **3** is formed at the inside surface with a bottomed support bore **4** of rectangular cross section coaxially with the spacer fitting part **5.** The partition **33** has a pin tight-fitting hole **34** formed therethrough coaxially with the spacer fitting part **5.**

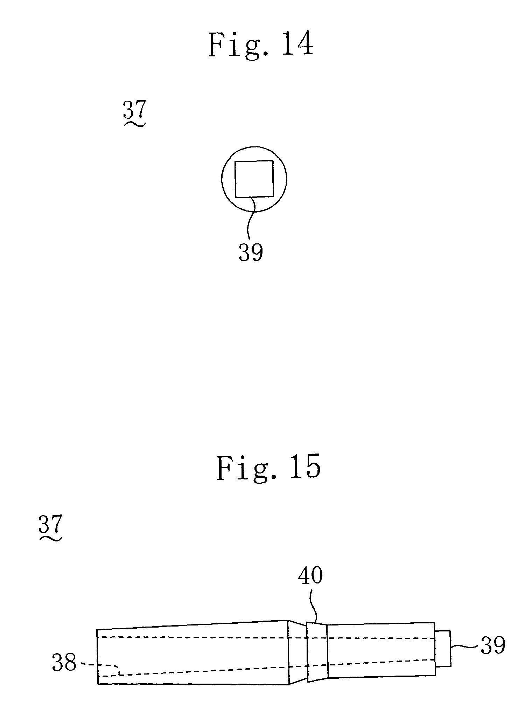

In order to pivotally mount the right-hand leg **1a** of the grip body **1** on the car body **B,** a fulcrum pin **37** and first and second mounts **42, 48** are provided. As shown in Figures 14 and 15, the fulcrum pin **37** has a substantially cylindrical profile, and the outer periphery of the distal end portion thereof on the spacer fitting part **5** side is tapered toward the distal end. And, the fulcrum pin **37** has a bottomed axial hollow **38** opening into the distal end surface and tapered toward the root end of the fulcrum pin **37.** On the other hand, the root end of the fulcrum pin **37** is formed integrally with a tight-fit part **39** of rectangular cross section, and the outer periphery thereof has a flange-shaped stop **40** extended therefrom. Further, as shown in Figure 12, the tight-fit part **39** of the fulcrum pin **37** is tightly fitted against rotation into the support bore **4** of the pin support **3** of the grip body **1.** The intermediate portion of the fulcrum pin **37** is fitted into the pin tight-fitting hole **34** in the partition **33** of the grip body **1** in liquid-tight manner, and the flange-shaped stop **40** on the outer periphery of the fulcrum pin **37** is engaged on the side surface of the partition **33** of the grip body **1.** In this manner, the fulcrum pin **37** is fixedly assembled to the grip body **1** for unitary rotation and against axial movement. The spacer fitting part **5** of the grip body **1** is formed coaxially with the fulcrum pin **37,** and the distal end portion of the fulcrum pin **37** extends to pass the inside of the spacer fitting part **5** toward its opening.

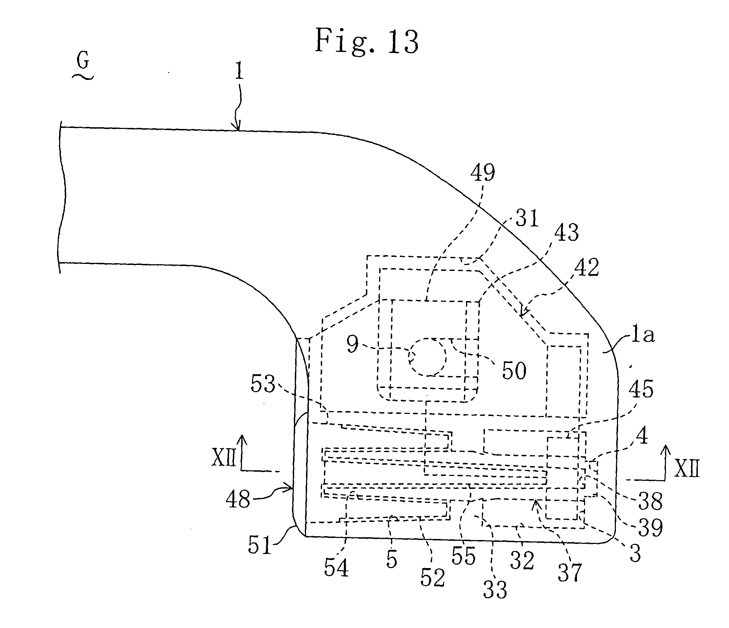

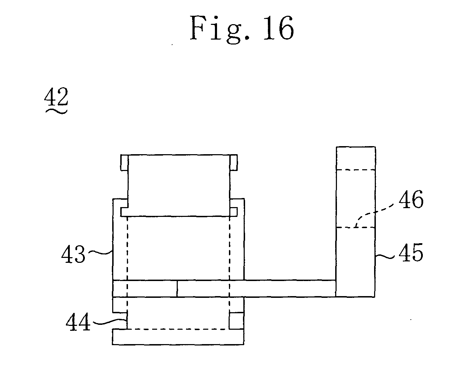

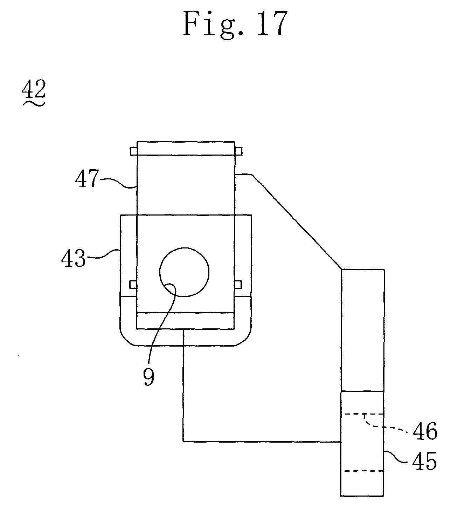

As shown in Figures **16** and **17,** the first mount **42** has a fixing part **43** disposed and accommodated in the upper accommodating section **31** of the grip body **1.** The fixing part **43** is provided with: a screw free-receiving hole **9** for freely receiving a screw (not shown) for fastening the first mount **42** to the car body **B;** and a hollow engaging part **44** of rectangular cross section, laterally formed through the fixing part **43,** for engaging the hereinafter described fixing part **49** (see Figures **13, 18** and **19)** of the second mount **48.**

At the front side of the fixing part **43,** a bearing part **45** is integrally formed which extends rightwardly downward from the fixing part **43** to be disposed and accommodated in the lower accommodating section **32** of the grip body **1.** The bearing part **45** has a pin loose-fitting hole **46** formed therethrough. Under this configuration, as shown in Figure **12,** the bearing part **45** of the first mount **42** is disposed in the lower accommodating section **32** of the grip body **1,** and the fulcrum pin **37** is rotatably inserted into the pin loose-fitting hole **46** of the bearing part **45.** In this manner, the grip body **1** is supported to the first mount **42,** fixedly mounted on the car body **B,** for swing motion through the fulcrum pin **37.**

Further, as shown in Figure **12,** a torsion coil spring **16** is carried about the fulcrum pin **37** between the partition **33** of the grip body **1** and the bearing part **45** of the first mount **42.** Both ends of the spring **16** are anchored to the bearing part **45** and the partition **33,** respectively. Under this configuration, the spring bias force of the torsion coil spring **16** urges the grip body **1** from use to retracted position.

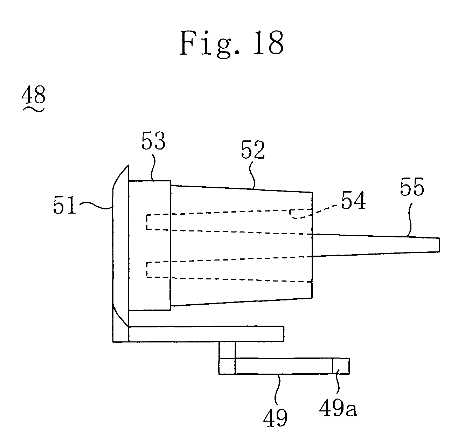

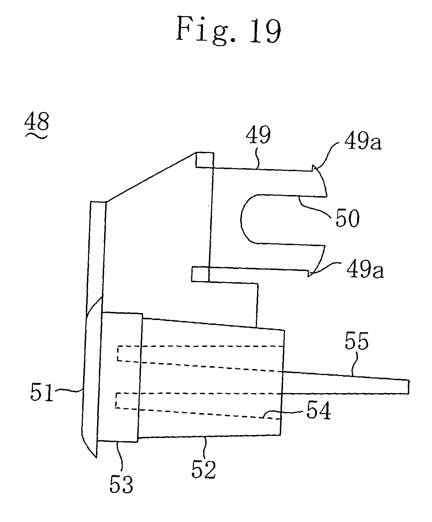

On the other hand, as shown in Figures **18** and **19,** the second mount **48** includes a fixing part **49** disposed and accommodated in the upper accommodating section **31** of the grip body **1.** Respective pawls **49a, 49a** protrude from upper and lower side ends of the fixing part **49.** The fixing part **49** is slidingly inserted into the engaging part **44** of the fixing part **43** of the first mount **42** to engage the engaging part **44** at the pawls **49a, 49a.** This engagement between the fixing part **49** and the engaging part **44** causes the second mount **48** to be fixedly integrally engaged with the first mount **42.** A reference numeral **50** denotes a notch formed to correspond to the screw free-receiving hole **9** of the first mount **42.**

To the front side of the fixing part **49** of the second mount **48,** a substantially cylindrical spacer part **51** is integrally connected which extends downwardly from the fixing part **49** to be disposed and accommodated in the spacer fitting part **5** of the grip body **1.** One end portion of the spacer part **51** is composed of a tapered insert part **52** and a sealing part **53** extending radially outwardly from the insert part **52.** As shown in Figure 12, the insert part **52** of the spacer part **51** is inserted into the spacer fitting part **5** of the grip body **1** with a space of substantially uniform clearance defined therebetween to allow rotation of the grip body **1.** The sealing part **53** is fitted onto the open end portion of the spacer fitting part **5** in liquid-tight manner. The sealing part **53** closes the open end portion of the spacer fitting part **5** so as to allow rotation relative to the opening, and seals the space between the outer periphery of the insert part **52** of the spacer part **51** and the inner periphery of the spacer fitting part **5,** a space between the inner periphery of the hereinafter described recess **54** and the outer periphery of the fulcrum pin **37,** and a space between the outer periphery of the hereinafter described loose-fit pin **55** and the inner periphery of the axial hollow **38** of the fulcrum pin **37.** In Figure **17,** a reference numeral **47** denotes a cover similar to the cover **10** described in Embodiment 1.

Alternatively, if a sealing member such as an O-ring is interposed between the intermediate portion of the fulcrum pin **37** and the pin tight-fitting hole **34** of the partition **33** and/or between the opening of the spacer fitting part **5** and the sealing part **53** of the spacer part **51,** the liquid-tight seal between these members can be further improved.

In the distal end surface of the spacer part **51** of the second mount **48,** a recess **54** of a tapered hole diminishing its inner diameter toward the root end of the spacer part **51** (toward the bottom thereof) is formed coaxially with the outer periphery of the spacer part **51.** A tapered loose-fit pin **55** is extended coaxially and integrally from the bottom of the recess **54** to pass the inside of the recess **54** toward an opening thereof. The loose-fit pin **55** extends beyond the opening of the recess **54.** When the spacer part **51** is inserted into the spacer fitting part **5** of the grip body **1,** the distal end portion of the fulcrum pin **37** is rotatably inserted into the recess **54** of the spacer part **51** with a space of substantially uniform clearance defined therebetween, and the loose-fit pin **55** of the spacer part **51** is rotatably inserted into the axial hollow **38** of the fulcrum pin **37** with a space of substantially uniform clearance defined therebetween.

The three spaces between the inner periphery of the spacer fitting part **5** of the grip body **1** and the outer periphery of the insert part **52** of the spacer part **51** of the second mount **48,** between the inner periphery of the recess **54** of the spacer part **51** and the outer periphery of the fulcrum pin **37** and between the outer periphery of he loose-fit pin **55** of the spacer part **51** and the inner periphery of the axial hollow **38** of the fulcrum pin **37,** are communicated with each other. A viscidity **L** is filled in and lies between these spaces. The viscidity **L** in these three-layered spaces form a damper **56** for generating torque providing resistance to swing motion of the grip body **1.**

In assembling the assist grip **G** of this embodiment with the car body **B,** the root end of the fulcrum pin **37** is first inserted into the pin tight-fitting hole **34** of the partition **33** through the spacer fitting part **5** of the grip body **1.** Then, the root end of the fulcrum pin **37** passing through the pin tight-fitting hole **34** is inserted into the torsion coil spring **16** and the pin loose-fitting hole **46** of the bearing part **45** of the first mount **42.** Thereafter, the tight-fit part **39** of the fulcrum pin **37** is fixedly fitted into the support bore **4** of the pin support **3** of the grip body **1,** and the flange-shaped stop **40** on the outer periphery of the fulcrum pin **37** is engaged on the side surface of the partition **33** of the grip body **1.** In this manner, the fulcrum pin **37** is fixedly assembled in unitary relation to the grip body **1.**

Subsequently, a desired amount of viscidity **L** is filled into the recess **54** of the spacer part **51** of the second mount **48,** into the spacer fitting part **5** of the grip body **1** and into the axial hollow **37** of the fulcrum pin **37.** Then, the first and second mounts **42, 48** are unitarily set by engaging the fixing part **49** of the second mount **48** to the engaging part **44** of the first mount **42** while sliding the former in the latter, and the spacer part **51** of the second mount **48** is inserted into the spacer fitting part **5** of the grip body **1.** Through this insertion, the distal end portion of the fulcrum pin **37** and the loose-fit pin **55** of the spacer part **51** are telescopically inserted into the recess **54** of the spacer part **51** and the axial hollow **38** of the fulcrum pin **37,** respectively. Also, as a result of the above insertion, the viscidity **L** is encapsulated in the respective spaces defined between the inner periphery of the spacer fitting part **5** of the grip body 1 and the outer periphery of the insert part **52** of the spacer part **51** of the second mount **48,** between the inner periphery of the recess **54** of the spacer part **51** and the outer periphery of the fulcrum pin **37** and between the outer periphery of the loose-fit pin **55** of the spacer part **51** and the inner periphery of the axial hollow **38** of the fulcrum pin **37.**

The assist grip **G,** having been assembled with the first and second mounts **42, 48** in the above manner, is assembled to the car body by passing a screw through the screw free-receiving hole **9** of the fixing part **43** of the first mount **42** and fastening the first mount **42** to the car body through the screw. Thereafter, the hinged type cover **47** is closed to cover the aperture of the fixing part **43** thereby hiding the screw.

Accordingly, in this embodiment, the grip body **1** is shifted between its retracted position and use position while swinging relative to the bearing part **45** of the first mount **42** and the spacer part **51** of the second mount **48** in unitary relation to the fulcrum pin **37.** At the time, the viscidity L lies in the respective spaces between the inner periphery of the spacer fitting part **5** of the grip body **1** and the outer periphery of the insert part **52** of the spacer part **51** of the second mount **48,** between the inner periphery of the recess **54** of the spacer part **51** and the outer periphery of the fulcrum pin **37** and between the outer periphery of the loose-fit pin **55** of the spacer part **51** and the inner periphery of the axial hollow **38** of the fulcrum pin **37.** Therefore, for example, during the swing motion of the grip body **1** from use to retracted position, the viscosity of the viscidity **L** provides resistance to the swing motion of the grip body **1.** Such resistance causes the grip body **1** to swing slowly from use to retracted position. Accordingly, it is prevented that the grip body **1** hits the car body hard to cause a beating sound. And, such slow swing motion provides an upscale image to the assist grip **G.**

Further, since the damper **56** is formed by filling the viscidity **L** into the respective spaces between the inner periphery of the spacer fitting part **5** of the grip body **1** and the outer periphery of the insert part **52** of the spacer part **51** of the second mount **48,** between the inner periphery of the recess **54** of the spacer part **51** and the outer periphery of the fulcrum pin **37** and between the outer periphery of the loose-fit pin **55** of the spacer part **51** and the inner periphery of the axial hollow **38** of the fulcrum pin **37,** part of the damper **56** which provides rotational resistance is constructed in three layers of different diameters around the axis of rotation. Accordingly, the axial length of the damper **56** can be further shortened than Embodiment 1.

Furthermore, the grip body **1** is supported to the two mounts **42, 48** through the fulcrum pin **37.** Therefore, the assist grip **G** can be built up from the grip body **1,** the fulcrum pin **37,** the two mounts **42, 48** and the torsion coil spring **16** only. Accordingly, the number of components of the assist grip **G** can be reduced, resulting in cost reduction. In addition, since the damper **56** is accommodated in the grip body **1,** the appearance of the assist grip **G** can be improved.

### (Embodiment 3)

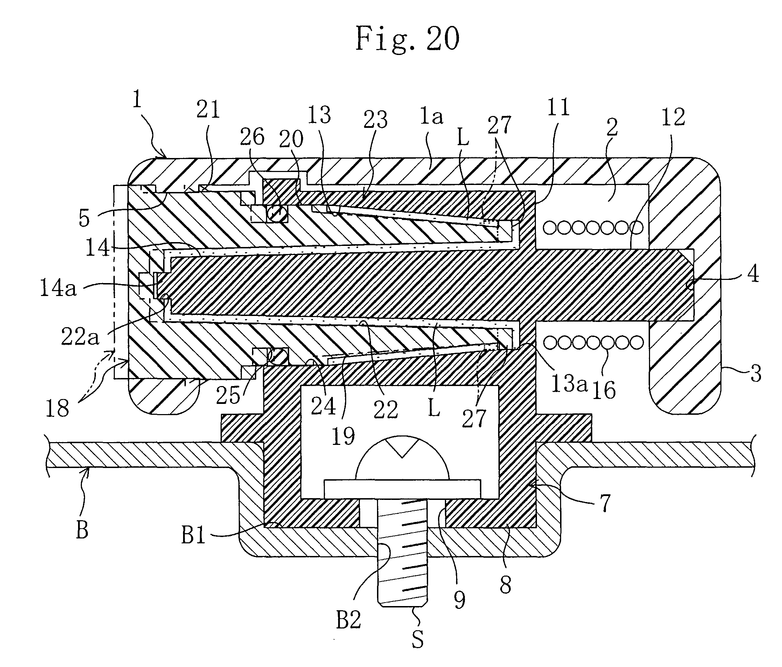

Figures **20** through **22** show Embodiment 3 of the invention, which aims at providing a sealing member for liquid-tight sealing a space filled with the viscidity **L** from the outside and enhancing the bearing property of the mount **7** relative to the spacer **18** or the grip body **1.**

Specifically, this embodiment is based on the structure of Embodiment 1 (see Figure **1**), in which an annular groove **25** is formed circumferentially in the outer periphery of the sealing part **20** of the spacer **18** corresponding to the sealing surface **24** located in the vicinity of the open end of the recess **13** of the amount **7,** and a sealing member **26** such as an O-ring is inserted into the annular groove **25** so as to engage against the sealing surface **24.** The engagement of the sealing member **26** against the sealing surface **24** seals from the outside the space between the outer periphery of the spacer **18** and the inner periphery of the recess **13** of the mount **7** and the space between the inner periphery of the pin loose-fitting part **22** of the spacer **18** and the outer periphery of the loose-fit pin **14** of the mount **7.**

The sealing member **26** is placed, when the spacer **18** is assembled with the leg **1a** of the grip body 1 by insertion into the recess **13** of the mount **7** and the viscidity **L** is filled with the spaces between the outer periphery of the spacer **18** and the inner periphery of the recess **13** of the mount **7** and between the inner periphery of the pin loose-fitting part **22** of the spacer **18** and the outer periphery of the loose-fit pin **14** of the mount **7** while expelling air from the spaces, to form a seal with the sealing surface **24** by engagement against the sealing surface **24** with the air in the spaces substantially fully expelled.

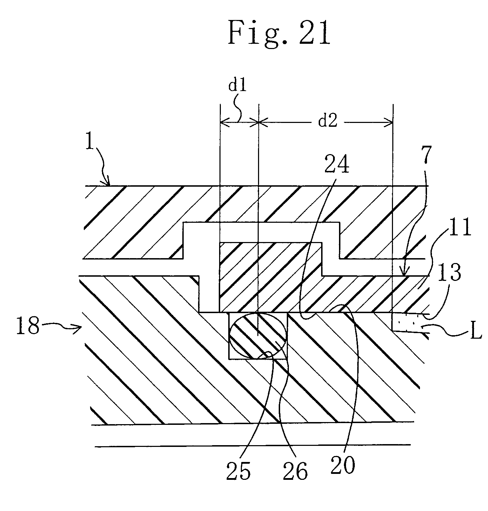

More specifically, as shown in enlarged manner in Figure **21,** the sealing member **26** is placed, when the spacer **18** is fully inserted into the recess **13** of the mount **7,** on a portion of the sealing surface **24** closer to the opening of the recess **13** than the centre of the sealing surface **24** in a direction of insertion of the sealing member **26** (lateral direction in Figures **20** and **21**), in other words, at such a position that a distance **d1** between the sealing member **26** and one end of the sealing surface **24** located on an opening side of the recess **13** is smaller than a distance **d2** between the sealing member **26** and the other end of the sealing surface **24** located on a bottom side of the recess **13** (i.e., **d2>d1**).

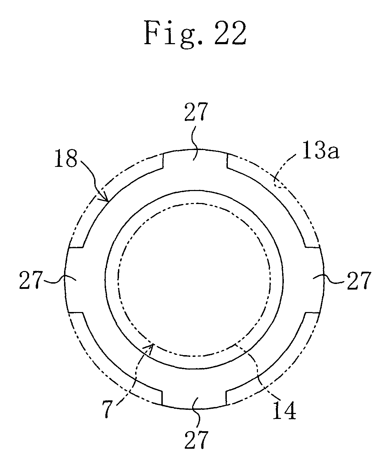

As also shown in Figure **22,** the bottom end portion of the inner periphery of the recess **13** of the mount **7** is formed with a cylindrical supporting surface **13a** extending parallel with the axis of the recess **13.** And, a plurality of (four in this example shown in the figure) support flanges **27, 27,** ... are radially outwardly extended in circumferentially equally spaced relation on the outer periphery of the distal end of the insert part **19** of the spacer **18.** The end faces (outer peripheries) of the support flanges **27** relatively slidably engage the supporting surface **13a** located in the bottom end portion of the inner periphery of the recess **13** of the mount **7.** The support flanges **27, 27,** ... support the distal end of the insert part **19** of the spacer **18** for rotation relative to the mount **7.** The other structures are the same as in Embodiment 1.

The space between the outer periphery of the spacer **18** and the inner periphery of the recess **13** of the mount **7** is communicated with the space between the inner periphery of the pin loose-fitting part **22** and the outer periphery of the loose-fit pin **14** of the mount **7** through slots between the support flanges **27, 27.**

Thus, in this embodiment, the sealing member **26** of the sealing part **20** of the spacer **18** is placed on a portion of the sealing surface **24** (a section of the inner periphery of the recess **13** in the vicinity of its open end) of the mount **7** closer to the opening of the recess **13** than the centre of the sealing surface **24** in a direction of insertion of the sealing member **26.** Therefore, in the assembly of the spacer **18,** when the spacer **18** is inserted into the recess **13** of the mount **7** with necessary amounts of viscidities **L** previously received in the recess **13** and the pin loose-fitting part **22** of the spacer **18,** respectively, and the viscidities **L** are thereby filled with the respective spaces defined between the outer periphery of the spacer **18** and the inner periphery of the recess **13** of the mount **7** and between the inner periphery of the pin loose-fitting part **22** of the spacer **18** and the outer periphery of the loose-fit pin **14** of the mount **7** while expelling air in both the spaces, a seal formation by engagement of the sealing member **26** against the sealing surface **24** is delayed as compared with the case where the sealing member **25** is placed at the centre of the sealing surface **24** in the direction of insertion of the sealing member **26.** As a result, as shown in imaginary lines in Figure **20,** the sealing member **26** forms a seal by engagement against the sealing surface **24** with substantially full air expelled from both the spaces. This allows to expel as much the air in the spaces as possible to fill the spaces with substantially the viscidity **L** alone and correspondingly enhances the damping effect of the viscidity **L.**

Further, in this embodiment, the plurality of support flanges **27, 27,** ... are extended on the outer periphery of the distal end of the insert part **19** of the spacer **18,** the end faces (outer peripheries) of the support flanges **27** slidably engage the supporting surface **13a** located in the bottom end portion of the inner periphery of the recess **13** of the mount **7,** and the support flanges **27, 27,** ... support the distal end of the insert part **19** of the spacer **18** for rotation relative to the mount **7.** Accordingly, the spacer **18** can be supported not only with the bottom (base end) of the pin loose-fitting part **22** to the loose-fit pin **14** of the mount **7** but also with the distal end of the insert part **19** to the supporting surface **13a** in the bottom end portion of the inner periphery of the recess **13** through the support flanges **27.** This enhances the bearing property of the mount **7** relative to the spacer **18** or the grip body **1.**

In this embodiment, a portion of the inner periphery of the recess **13** of the mount **7** located in the vicinity of the open end of the recess **13** is formed into the sealing surface **24,** the annular groove **25** is formed in the outer periphery of the sealing part **20** of the spacer **18,** and the sealing member **26** is inserted into the annular groove **25.** On the contrary, the outer periphery of the sealing part **20** of the spacer **18** may be formed into a sealing surface, an annular groove may be formed in a portion of the inner periphery of the recess **13** of the mount **7** located in the vicinity of the open end of the recess **13,** and the sealing member may be inserted into the annular groove. This modified structure also exerts the same operations and effects as obtained in Embodiment 3.

Further, in Embodiment 3, the outer periphery of the distal end of the insert part **19** of the spacer **18** is formed with the plurality of support flanges **27, 27,** ... which slidably engage the supporting surface **13a** located in the bottom end portion of the inner periphery of the recess 13 of the mount **7.** On the contrary, the bottom end portion of the inner periphery of the recess **13** of the mount **7** may be formed with a plurality of radially inwardly extending support flanges in circumferentially equally spaced relation, and the support flanges may engage for relative sliding movement against a cylindrical supporting surface provided on the outer periphery of the distal end of the insert part **19** of the spacer **18.**

### (Embodiment 4)

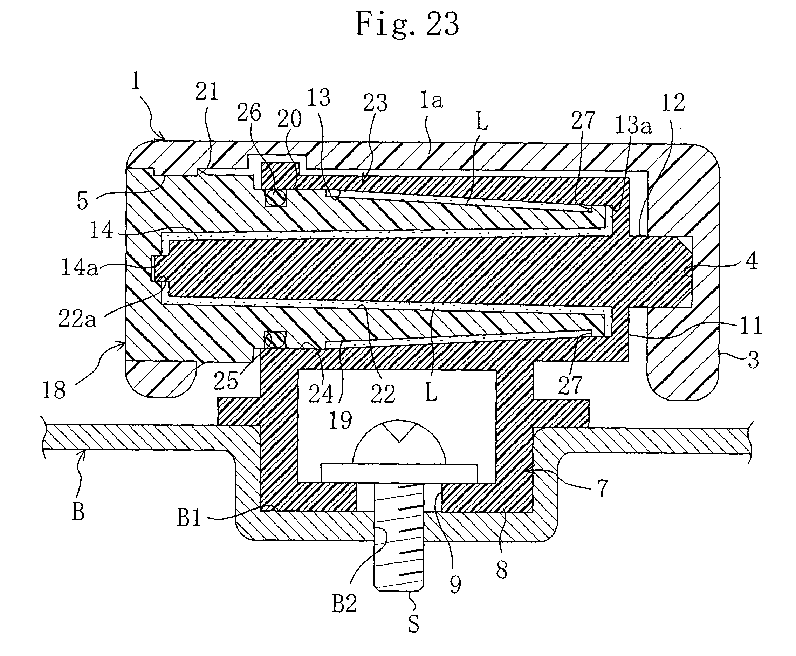

Figures **23** through **25** show Embodiment 4 of the invention. Unlike the aforementioned embodiments in which the torsion coil spring **16** and the damper **23** are provided in the common leg (right-hand leg) **1a** of the grip body **1,** this embodiment is constructed so that the right- and left-hand legs **1a, 1a** of the grip body **1** each separately include one of the spring **16** and the damper **23.**

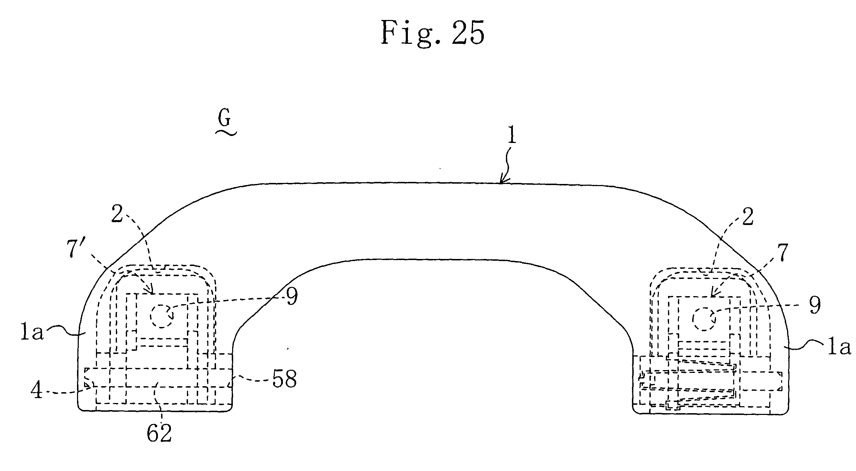

Specifically, in this embodiment, as shown in Figure **25,** the right- and left-hand legs **1a, 1a** of the grip body **1** are pivotally mounted for swing motion onto mounts **7, 7',** respectively. The damper **23** is provided only between the right-hand leg **1a** as one of the legs and the mount **7,** while the torsion coil spring **16** is provided only between the left-hand leg **1a** as the other leg and the mount **7'.**

As shown in enlarged manner in Figure **23,** the mechanism of mounting the right-hand leg **1a** of the grip body **1** onto the mount **7** and the mechanism of forming the damper **23** in the right-hand leg **1a** are essentially the same as in Embodiment 3 (see Figure **20**), but this embodiment is different from Embodiment 3 only in that the right-hand leg **1a** does not include the torsion coil spring **16.** Further, in correspondence with the lack of the torsion coil spring **16,** the length of the fulcrum pin **12** is reduced and the depth of the recess **13** of the mount **7,** the length of the loose-fit pin **14** and the length of the tapered insert part **19** of the spacer **18** are increased. This results in increasing the axial lengths of the spaces defined between the outer periphery of the spacer **18** and the inner periphery of the recess **13** of the mount **7** and between the inner periphery of the pin loose-fitting part **22** of the spacer **18** and the outer periphery of the loose-fit pin **14** of the mount **7.**

On the other hand, as shown in Figure **24,** the mount **7'** for pivotally mounting the left-hand leg **1a** of the grip body **1** is mounted onto the car body **B** in the same manner as the mount **7** for pivotally mounting the right-hand leg **1a** is done. In the figure, same components as used in the right-hand mount **7** are indicated by like reference characters and detailed description thereof will be omitted. An accommodating section **2** for accommodating the mount **7'** is formed in the left-hand leg **1a** of the grip body **1,** and laterally opposed sidewalls of the left-hand leg **1a** located on both lateral sides of the accommodating section **2** are formed into pin supports **3** and **3,** respectively. Bottomed and through support holes **4** and **58** are coaxially formed in the inside surfaces of the pin supports **3, 3** located on the left and right sides in Figure **24,** respectively. Further, a spring anchor lug **59** is integrally extended from the inner bottom wall (upside wall in Figure **24**) of the accommodating section **2** of the left-hand leg **1a** of the grip body **1** at a position thereof close to the right-hand pin support **3.** The spring anchor lug **59** is formed with a through hole **60** extending substantially parallel with the support holes **4, 58** of the left- and right-hand pin supports **3, 3.**

A portion of the mount **7'** accommodated in the accommodating section **2** of the left-hand leg **1a** of the grip body **1** is formed in the shape of a rectangular box open to the opposite side to a portion thereof mounted to the car body **B.** Pin receiving holes **61, 61** are coaxially formed through right and left sidewalls of the box, respectively. A laterally extending fulcrum pin **62** is passed through and mounted in both the pin receiving holes **61, 61.** Both end portions of the fulcrum pin **62** are rotatably inserted into the support holes **4, 58** of both the pin supports **3, 3** in the left-hand leg **1a.**

The torsion coil spring **16** is disposed on the fulcrum pin **62.** One end of the spring **16** is hooked through the hole **60** of the spring anchor lug **59,** while the other end extends, for example, radially outwardly, beyond the other portions and bears against a spring abutment **7a'** provided on the left sidewall of the mount **7'** shown in Figure **24.** The grip body **1** is urged into swing motion from the use position toward the retracted position by the torque of the spring **16.**

In a condition that the support holes **4, 58** of both the pin supports **3, 3** of the left-hand leg **1a** of the grip body 1 are coaxially aligned with the pin receiving holes **61, 61** of the mount **7',** the fulcrum pin **62** is inserted from the support hole **58** of the left-hand leg **1a** through the pin receiving holes **61, 61** of the mount **7'** into the support hole **4.** After the insertion of the fulcrum pin **62,** a snap ring **63** is inserted into the support hole **58** to a position of one end of the fulcrum pin **62** and fitted thereinto against the drop-out of the fulcrum pin **62.**

The other structures are the same as in Embodiment 3 and therefore the same effects as obtained in Embodiment 3 can also be obtained in this embodiment.

The structures of Embodiment 4 may be combined with those of Embodiment 1 so that the torsion coil spring **16** and the damper **23** are provided in one of the legs **1a** of the grip body like Embodiment 1 and an additional torsion coil spring **16** is provided in the other leg **1a.**

### (Embodiment 5)

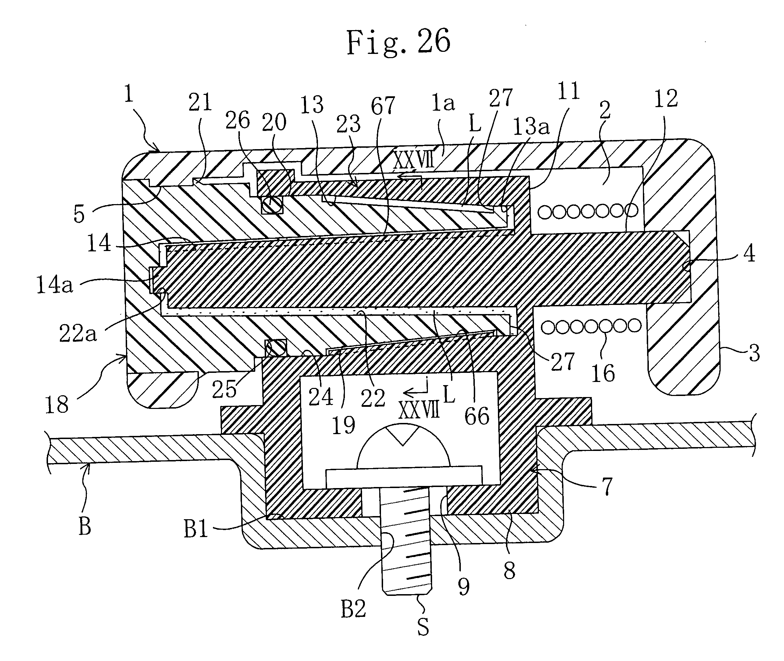

Figures **26** through **28** show Embodiment 5 of the invention. This embodiment aims at enhancing the flow resistance of the viscidity **L.**

Specifically, like Embodiment 3 (see Figure **20**), this embodiment is configured so that the tapered insert part **19** of the spacer **18** is inserted into the recess **13** of the mount **7,** the viscidity **L** is encapsulated in the spaces defined between the outer periphery of the insert part **19** and the inner periphery of the recess **13** and between the inner periphery of the pin loose-fitting part **22** of the spacer **18** and the outer periphery of the loose-fit pin **14** of the mount **7.** In this configuration, a first restriction **65** is formed integrally on the outer periphery of the insert part **19** of the spacer **18** so as to be radially outwardly raised therefrom. The first restriction **65** is formed of a rib extending along the axis of the insert part **19** over substantially the entire length of the outer periphery of the insert part **19,** and the top surface thereof is opposed to the inner periphery of the recess **13** of the mount **7** so as to be spaced apart from each other by a predetermined clearance.

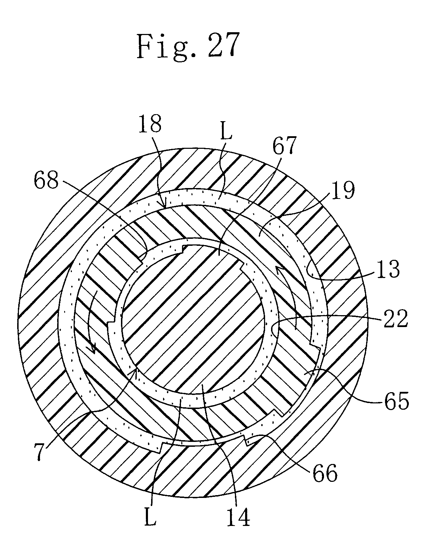

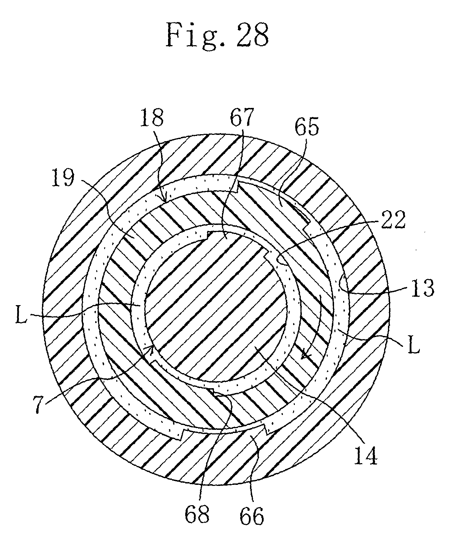

On the other hand, a second restriction **66** is formed integrally on the inner periphery of the recess **13** of the mount **7** so as to be radially inwardly raised therefrom. As shown in Figure **26,** the second restriction **66** is formed of a rib extending along the axis of the recess **13** over substantially the entire length of the inner periphery of the recess **13,** and the top surface thereof is opposed to the outer periphery of the insert part **19** of the spacer **18** so as to be spaced apart from each other by a predetermined clearance. And, as shown in Figures **27** and **28,** the first and second restrictions **65, 66** are placed at positions to allow the swing motion of the grip body **1** between the use position (shown in Figure **28**) and the retracted position (shown in Figure **27**) without interference with each other.

Furthermore, a third restriction **67** is formed integrally on the outer periphery of the loose-fit pin **14** of the mount **7** so as to be radially outwardly raised therefrom. The third restriction **67** is formed of a rib extending along the axis of the loose-fit pin **14** over substantially the entire length of the outer periphery of the loose-fit pin **14 ,** and the top surface thereof is opposed to the inner periphery of the pin loose-fitting part **22** of the spacer **18** so as to be spaced apart from each other by a predetermined clearance. On the other hand, a fourth restriction **68** is formed integrally on the inner periphery of the pin loose-fitting part **22** of the spacer **18** so as to be radially inwardly raised therefrom. The fourth restriction **68** is formed of a rib extending along the axis of the pin loose-fitting part **22** over substantially the entire length of the inner periphery of the pin loose-fitting part **22,** and the top surface thereof is opposed to the outer periphery of the loose-fit pin **14** of the mount **7** so as to be spaced apart from each other by a predetermined clearance. And, the third and fourth restrictions **67, 68** are placed at positions to allow the swing motion of the grip body **1** between the use and retracted positions, like the first and second restrictions **65, 66.**

Accordingly, in this embodiment, when the passenger releases the grip body **1** in use position shown in Figure **28,** the grip body **1** automatically swing clockwise of Figure **28** by the bias of the torsion coil spring **16** and moves from the use position to the retracted position shown in Figure **27.** Further, as described above, the first and second restrictions **65, 66** are extended on the outer periphery of the insert part **19** of the spacer **18** and the inner periphery of the recess **13** of the mount **7,** respectively. Therefore, the viscidity **L** in a zone between the approaching first and second restrictions **65, 66** in the space between the outer periphery of the insert part **19** of the spacer **18** and the inner periphery of the recess **13** is pressurisedby the first and second restrictions **65, 66** during the above swing motion of the grip body **1.** Accordingly, the viscidity **L** in the zone between the approaching first and second restrictions **65, 66** flows into an opposite zone (a zone between the first and second restrictions **65, 66** moving away from each other) while being squeezed through the clearance between the first restriction **65** and the inner periphery of the recess **13** of the mount **7** and the clearance between the second restriction **66** and the outer periphery of the spacer **18.**

In addition, during the clockwise swing motion of the grip body **1** from use to retracted position, also in the space between the inner periphery of the pin loose-fitting part **22** of the spacer **18** and the outer periphery of the loose fit pin **14** of the mount **7,** the viscidity **L** in a zone between the fourth restriction **68** on the inner periphery of the pin loose-fitting part **22** and the third restriction **67** on the outer periphery of the loose fit pin **14** is pressurised by approach of both the restrictions **67, 68,** and thereby flows into an opposite zone (a zone between the third and fourth restrictions **67, 68** moving away from each other) while being squeezed through the clearance between the fourth restriction **68** and the outer periphery of the loose fit pin **14** of the mount **7** and the clearance between the third restriction **67** and the inner periphery of the pin loose-fitting part **22** of the spacer **18.**

As a result, the damping effect is enhanced by the flow resistances of the viscidity **L** passing through the restrictions **65-68** to reduce the swinging speed of the grip body **1,** which can further slowly swing the grip body **1**.

In this embodiment, each of the restrictions **65** through **68** is formed along the axis over substantially the entire length of the corresponding surface. Such an arrangement is preferable because it can provide a maximum damping effect. However, each length of the restrictions **65** through **68** may not necessarily be maximised as described above but may be reduced as necessary or may be arbitrarily set depending upon, for example, the property of the viscidity **L** or the bias of the torsion coil spring **16.**

Further, in Embodiment 5, four restrictions in all, i.e., the first through fourth restrictions **65-68,** are formed. However, only the first and second restrictions **65, 66** may be formed. Alternatively, only the third and fourth restrictions **67, 68** may be formed.

### (Embodiment 6)

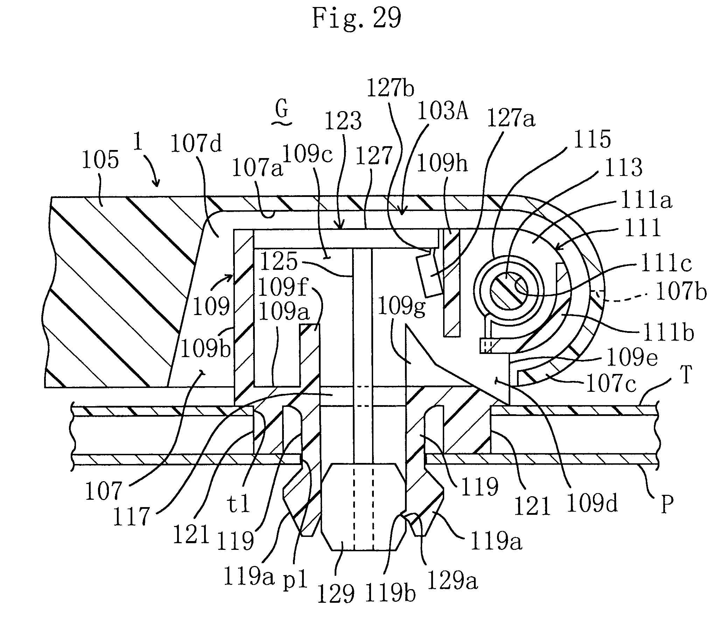

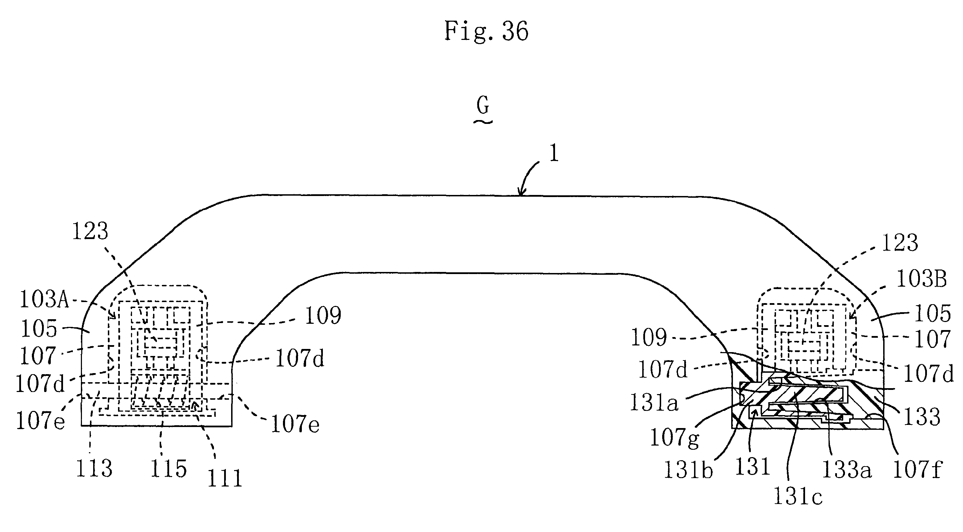

Figures **29** through **36** show a retractable assist grip **G** according to Embodiment 6 of this invention. This assist grip **G** includes an elongated grip body 1 made of resin such as PP and mounts **103A** and **103B** made of resin such as POM. The grip body **1** and the mounts **103A, 103B** are separate parts. The grip body **1** is curved approximately in the shape of a bracket and has a pair of legs **105, 105** at the lengthwise right and left ends. The left-hand leg **105** as viewed in Figure **36** is pivotally mounted to the mount **103A,** while the right-hand leg **105** as viewed in Figure **36** is pivotally mounted to the mount **103B.** Since the mounts **103A** and **103B** have the below-described common characteristics, though they have different hinge structures (see Figure **36),** the common parts will be described with reference to the mount **103A** alone without using the mount **103B.**

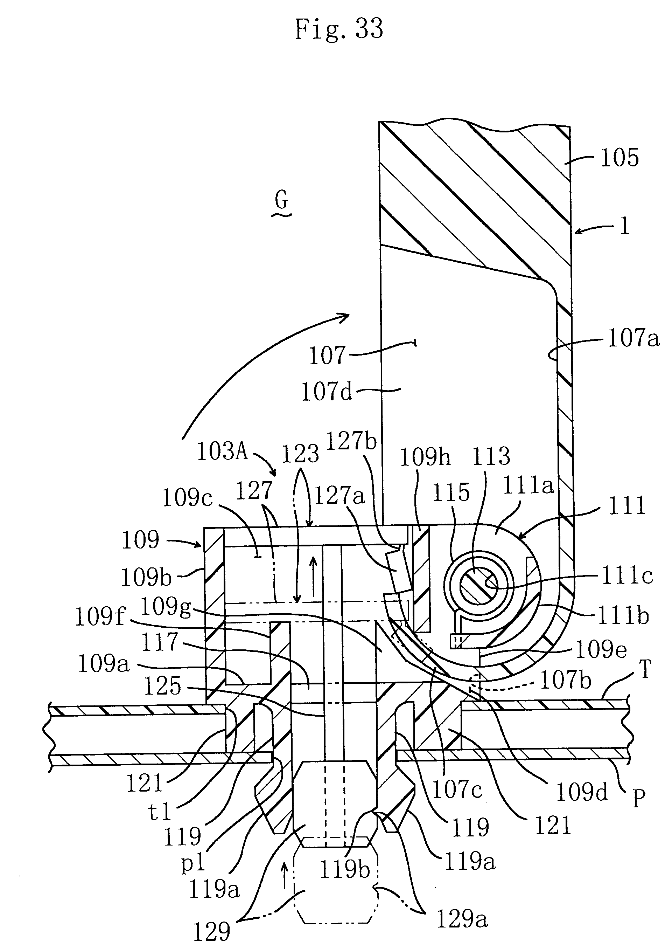

The assist grip **G** is mounted to an inner panel **P** as a car body panel (fixed body) through the two mounts **103A, 103B.** The inner panel **P** is covered with a ceiling member **T** as an internal trim part. At a position of the inner panel **P** at which the assist grip is mounted, two rectangular mounting holes **p1** are formed to correspond to the two legs **105** of the assist grip **G** and have a distance therebetween corresponding to that between the two legs **105.** Further, at a position of the ceiling member **T** at which the assist grip is mounted, two rectangular mounting holes **t1** larger in diameter than the mounting holes **p1** are formed to correspond to the two legs **105** of the assist grip **G** and have a distance therebetween corresponding to that between the two legs **105.** The mounts **103A, 103B** are mounted in the two mounting holes **p1** of the inner panel **P,** respectively. In this mounted condition, the grip body **1** is swung between its use and retracted positions. Here, the retracted position of the grip body **1** means, as shown in Figure **29,** the position when the grip body **1** is directed upward (to the left in Figure **29**) and lies along the ceiling member **T** forming substantially a perpendicular surface. On the other hand, the use position thereof means, as shown in Figure **33,** the position when the grip body **1** is directed to the car room and extends substantially horizontally.

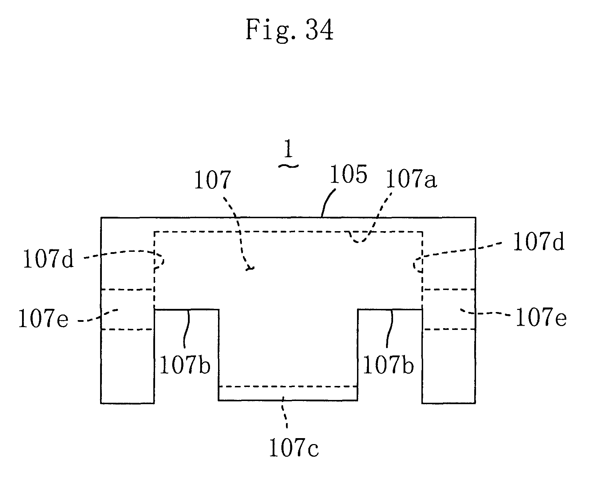

An accommodating section **107** is formed on the back of the leg **105** of the grip body **1** (on the side thereof opposed to the ceiling member **T** in the retracted position of the assist grip) so as to be recessed in an approximately rectangular shape upwardly from the bottom end of the leg **105.** In the retracted position of the assist grip, the leg **105** is held against interference with the mount **103A, 103B** by accommodating in the accommodating section **107** a hereinafter described mount body **109** of the mount **103A, 103B** extending toward the car room from the ceiling member **T.** As shown in Figure **34,** the bottom end of the leg **105** is cut out at two portions thereof in a rectangular shape to form abutments **107b** as swing stops for holding the grip body **1** in a horizontal attitude at its use position. A portion of the leg **105** between the two abutments **107b** constitutes a pusher **107c** which turns toward the opening side of the accommodating section **107** to push up a hereinafter described locking pin **123** in the opposite direction of its insertion into a through hole **117** described later. The structures described so far are common to the right- and left-hand legs **105.** However, the hinge structures for mounting the grip body **1** for swing motion to the mounts **103A** and **103B** are slightly different between the right- and left-hand legs **105.**

Specifically, in each of the right- and left-hand legs **105,** two laterally opposed sidewalls **107d** of the accommodating section **107** act as pin supports. The two sidewalls **107d** of the left-hand leg **105** as viewed in Figure **36** are provided with opposed support holes **107e** as through holes, respectively, while the two sidewalls **107d** of the right-hand leg **105** as viewed in figure **36** are formed with a through spacer fitting hole **107f** of larger diameter and a bottomed support bore **107g** of smaller diameter, respectively, so as to be opposed to each other.

As shown in Figure **29,** the left-hand mount **103A** as viewed in Figure **36** has a mount body **109** protruding toward the car room. The mount body **109** is formed in the shape of a rectangular box formed of a bottom wall **109a** and sidewalls **109b.** In the sidewalls **109b,** a recess **109c** open to the car room is formed. The lower end of the sidewall **109b** forming one side (right-hand side in Figure **29**) of the mount body **109** is formed with an entrance **109d** allowing for entry of the pusher **107c** of the leg **105** therein. Side edges on both sides of the entrance **109d** form stops **109e** abuttable on the respective abutments **107b** of the leg **105.** On swinging the grip body **1** from retracted to use position, the abutments **107b** abut on the stops **109e** so that the grip body **1** is held against further swing motion and in a horizontal attitude at the use position (see Figure **33**).

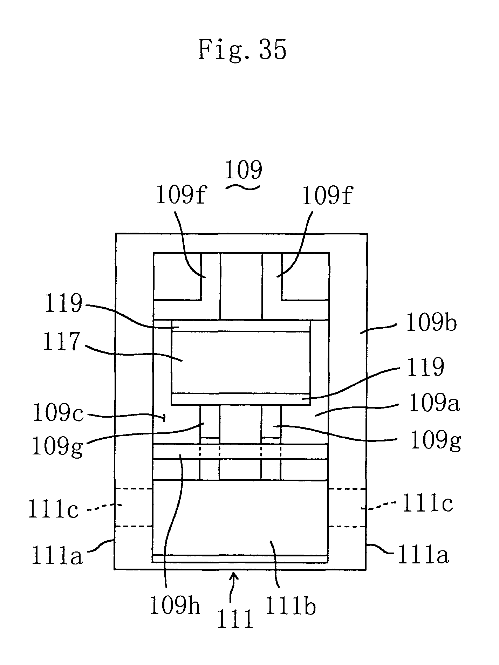

As also shown in Figure **35,** two raised portions **109f** of L-shape as viewed from above for preventing the locking pin from dropping down into the through hole **117** are juxtaposed in one end portion (left-hand portion as viewed in Figure **29** or upper end portion as viewed in Figure **35**) of the bottom wall **109a.** Further, in a portion of the bottom wall **109a** laterally away from the raised portions **109f** (right-hand portion as viewed in Figure **29** or lower portion as viewed in Figure **35**), another two raised portions **109g** of substantially triangular as viewed from sidewise for preventing the locking pin from dropping down into the through hole **117** are juxtaposed in spaced relation to the raised portions **109f.** The raised portions **109g** located on the right side as viewed in Figure **29** (the lower side as viewed in Figure **35**) are formed at side surfaces closer to the entrance **109d** into inclined surfaces. The inclined surfaces act as a guide for smooth upward movement of a movement assist piece **127a** described later of the locking pin **123** as shown in Figure **29.**

In the left-hand mount **103A** as viewed in Figure **36,** a laterally protruding section formed of three sidewalls **109b** above the entrance **109d** constitutes a swing support section **111.** The swing support section **111** consists of a pair of pin supports **111a** and a connecting part **111b** for connecting the pair of pin supports **111a.** The pair of pin supports **111a** are formed with pin receiving holes **111c,** respectively. A pin **113** is inserted into the two pin receiving holes **111c** and both ends of the pin **113** are inserted into the right and left support holes **107e** of the leg **105.** Thereby, the grip body **1** is supported for swing motion to the mount body **109.** A torsion coil spring **115** is disposed on the pin **113.** The torsion coil spring **115** is anchored at its one end to the connecting part **111b** of the swing support section **111** and at the other end, through it is not shown, to the lower end of the leg **105.** By the torque of the torsion coil spring **115,** the grip body **1** is urged into swing motion from use to retracted position and the mount body **109** can be accommodated in the accommodating section **107** in the retracted position of the assist grip (see Figure **29**).

The recess **109c** of the mount body **109** is divided into two sections by a partition **109h.** The swing support section **111** is provided at one side (right side in Figure **29** or lower side in Figure **35**) of the partition **109h.** A portion of the bottom wall **109a** located at the other side (left side in Figure **29** or upper side in Figure **35**) of the partition **109h** is formed with a rectangular through hole **117** passing between the raised portions **109f** and **109g** of the bottom wall **109a** from front to back (from upper to lower side as viewed in Figure **29**). On the periphery of the through hole 117 on the back of the bottom wall **109a** of the mount body **109,** a pair of flexible engaging pieces **119** are oppositely extended which can be inserted into the mounting hole **p1** of the inner panel **P** to engage on the edge of the mounting hole **p1.** Pawls **119a** for preventing the drop-out of the mount body **109** from the inner panel **P** are formed at the respective distal ends of the flexible engaging pieces **119** so as to be protruded outwardly from the through hole **117.** On the back of the pawl **119a** of one (right-hand one in Figure **29**) of the flexible engaging pieces **119,** a projection **119b** is formed for retaining the locking pin **123** in its locking position. Further, on the back of the bottom wall **109a** of the mount body **109,** two abutment pieces **121** are extended beside the flexible engaging pieces **119.** The abutment pieces **121** abut on the periphery of the mounting hole **p1** of the inner panel P from the front side of the inner panel **P** when the assist grip is mounted to the inner panel **P.**

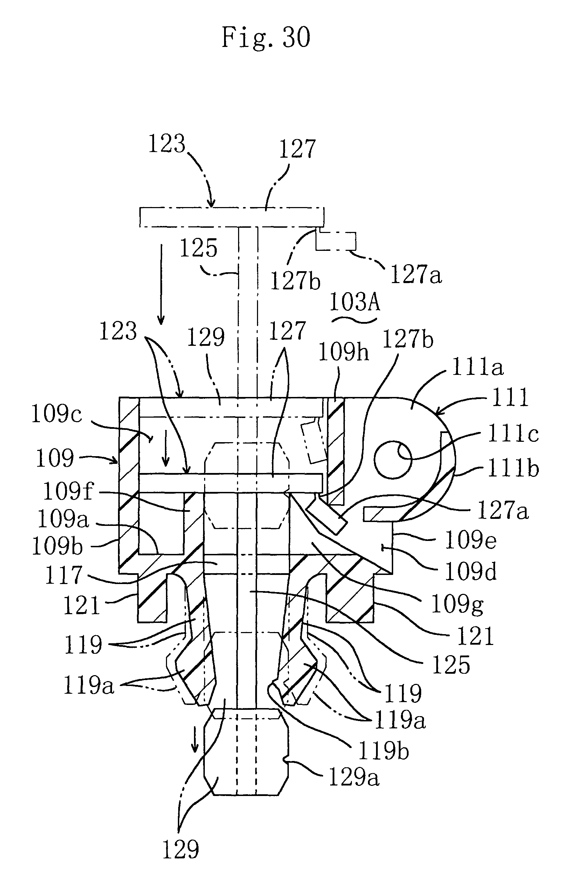

The two flexible engaging pieces **119** are pushed apart from each other by a resin-made locking pin **123.** The locking pin **123** consists of a rod **125,** a rectangular cap **127** integrally provided at the root end of the rod **125,** and an extension **129** as a pin top integrally provided at the distal end of the rod **125.** The extension **129** is formed with a locking retention notch **129a** for seating the locking retention projection **119b** of the pawl **119a** of the flexible engaging piece **119** therein. Amovement assist piece **127a** is integrally extended from the cap **127** through a thinning portion **127b.** The movement assist piece **127a** is rockable with respect to the cap **127** through the thinning portion **127b.** Before inserting the locking pin **123** into the through hole **117,** the movement assist piece **127a** is in parallel with the cap **127** (at its uppermost position) as shown in dash-single-dot lines in Figure **30.** In inserting the locking pin **123** into the through hole **117,** the movement assist piece **127a** lies along the partition **109h** (at an intermediate position) as shown in dash-double-dot lines in Figure **30** with the push thereof by the operator. Further, when the locking pin **123** is fully inserted into the through hole **117** to the extent that engages the bottom of the cap **127** to the raised portions **109f, 109g** of the bottom wall **109a,** the movement assist piece **127a** is located between the raised portions **109g** and the partition **109h** as shown in solid lines in Figure **30.** In mounting the assist grip **G** to the inner panel **P,** the swing motion of the grip body **1** to the use position causes the pusher **107c** to abut on the movement assist piece **127a** and push the locking pin **123** in the opposite direction of the insertion into the through hole **117** as shown in Figure **33.**

Before the mounts **103A, 103B** are carried in the car body assembly line, the locking pin **123** is previously inserted into the through hole **117** of the mount body **109** against dropping out therefrom. Specifically, prior to the mounting of the grip body **1** to the mounts **103A** and **103B,** the locking pin **123** is inserted into the through hole **117** from the front side. During this insertion, the extension **129** at the distal end thereof passes between both the pawls **119a** while pushing both the flexible engaging pieces **119** apart from each other. Then, when the extension **129** passes over the pawls **119a,** the distance between the distal ends of the flexible engaging pieces **119** is narrowed. By the narrowed distance between the distal ends of the flexible engaging pieces **119,** the extension **129** is restrained against movement in the opposite direction of the insertion into the through hole **117** and held at a position having passed over the locking retention projection **119b** (outside of the pawls **119a**) as shown in Figure **30.**

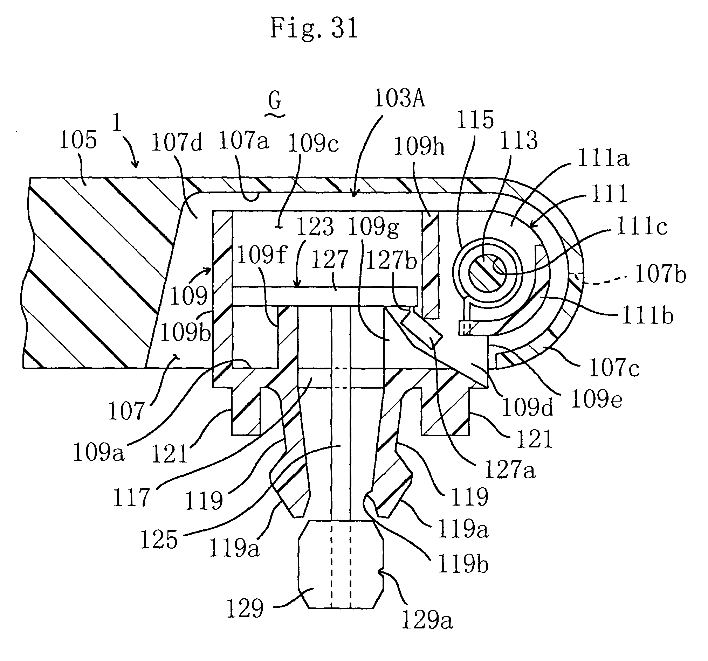

Further, in mounting the mount body **109** in which the locking pin **123** is inserted as described above, namely, the assist grip **G** of which the grip body **1** is mounted to the mounts **103A** and **103B** (see Figure **31**), to the inner panel **P** in the car body assembly line, the abutment pieces **121** of the mount body **109** are caused to abut on the respective peripheries of the mounting holes **p1** of the inner panel **P** from the front side thereof, and in this state the grip body **1** is swung toward its use position. The pusher **107c** of the leg **105** thereby pushes up the movement assist piece **127a** so that the locking pin **123** is moved back in the opposite direction of the insertion into the through hole **117.** Through this backward movement of the locking pin **123,** the extension **129** goes back and enters between the flexible engaging pieces **119** while pushing them apart from each other, and the locking retention projection **119b** of the pawl **119a** then seats in the locking retention notch **129a** of the extension **129.** The extension **129** is thus retained at the locking position between the pawls **119a** so that the locking pin **123** is held in locking condition with the flexible engaging pieces **119** held engaged on the edge of the mounting hole **p1.**

The right-hand mount **103B** as viewed in Figure **36** is different from the left-hand mount **103A** in their hinge structures for mounting the grip body **1** for swing motion. However, the other structures are the same as in the left-hand mount **103A.** Specifically, in the right-hand mount **103B,** like Embodiment 1, the mount body **109** is provided with a bottomed cylindrical swing support section **131** for supporting the right-hand leg **105** as viewed in Figure **36** for swing motion. The swing support section **131** includes a recess **131a** diminishing its diameter toward the bottom (the left side as viewed in Figure **36**). A fulcrum pin **131b** is extended outwardly from the bottom of the swing support section **131.** A loose-fit pin **131c** diminishing its diameter toward its distal end (to the right side in Figure **36)**) is extended from the inner bottom of the recess **131a** in coaxial relation with the fulcrum pin **131b.** A spacer **133** diminishing its diameter toward its distal end (to the left side in Figure **36**) is inserted at its root end into a spacer fitting hole **107f** of the right-hand leg **105.** In the spacer **133,** a pin loose-fitting part **133a** diminishing its diameter toward its bottom (to the right side in Figure **36**)is formed from the distal to root end of the spacer **133.** The spacer **133** is inserted into the recess **131a** of the swing support section **131** with a space left therebetween. The loose-fit pin **131c** of the swing support section **131** is inserted into the pin loose-fitting part **133a** with a space left therebetween. These two spaces form a continuous single space. A viscidity (not shown) made of a high-viscosity liquid such as silicon is encapsulated in the continuous space, thereby forming a damper for producing torque acting as resistance against the swing motion of the grip body **1.** By action of this damper, when swung from use to retracted position, the grip body **1** can return slowly to the retracted position against torque of the torsion coil spring **115.**

Next, the mounting of the assist grip **G** to the inner panel **P** in this embodiment will be described with reference to Figures **30** through **33.** First, the movement assist piece **127a** of the cap **127** of the locking pin **123** is turned at the thinning portion **127b** from the position shown in dash-single-dot lines in Figure **30** to the position shown in dash-double-dot lines in Figure **30** in the direction of insertion. In this condition, the locking pin **123** is inserted into the through hole **117** of the mount body **109** from the front side thereof and pushed thereinto until the back face of the cap **127** abuts on the raised portions **109f, 109g.** During this insertion, since no restriction is present outside of the pair of flexible engaging pieces **119,** the extension **129** at the distal end of the locking pin **123** passes between the pair of flexible engaging pieces **119** while pushing them apart from each other, passes over the pair of pawls **119a** located at the locking position, and then moves outside beyond the distal ends of the pawls **119a** (see solid lines in Figure **30**). In this case, though the locking retention projection **119b** temporarily seats in the locking retention notch **129a** of the extension **129,** this seating engagement is released by a force of inserting the locking pin **123** and the locking pin **123** is further inserted. After the extension **129** has passed over the flexible engaging pieces **119,** the flexible engaging pieces **119** pushed apart from each other are released from the pressing force of the extension **129** and regains its original position of narrow distance by its own restoring force. In this condition, the locking pin **123** is not only restrained against further movement in the direction of insertion since the back of the cap **127** abuts on the raised portions **109f** and **109g,** but also restrained against movement opposite to the direction of insertion since the extension **129** abuts on the distal ends of the pawls **119a.** As a result, the extension **129** is retained outside of the distal ends of the pawls **119a.**

In this manner, the locking pin **123** is held against drop-out from the through hole **117** of the mount body **109** and therefore can be prevented from being lost before the mounts **103A, 103B** are carried in the car body assembly line. Accordingly, lack of parts and a difficult pulling work of the locking pin **123** falling into locking condition are eliminated. This avoids a serious impediment to a smooth flow of the car body assembly line.

During the insertion of the locking pin **123,** the movement assist piece **127a** moves guidedly along the partition **109h** and is then presented between the partition **109h** and the raised portions **109g.**

Next, the grip body **1** is mounted to the mounts **103A, 103B** in which the locking pin **123** has been assembled in the mount body **109** in the above manner, thereby forming the assist grip **G** as shown in Figure **31.** Since the mount **103A** shown in Figures **30** through **33** is the left-hand one shown in Figure **36,** the torsion coil spring **115** is disposed on the pin **113** of the swing support section **111** in Figure **31.** On the other hand, in the right-hand mount **103B** as viewed in Figure **36,** the spacer **133** is inserted into the swing support section **131,** thereby providing a damper function. In this condition, the grip body **1** takes a retracted position with respect to the mounts **103A, 103B** by the torque of the torsion coil spring **115** (see Figure **31**).

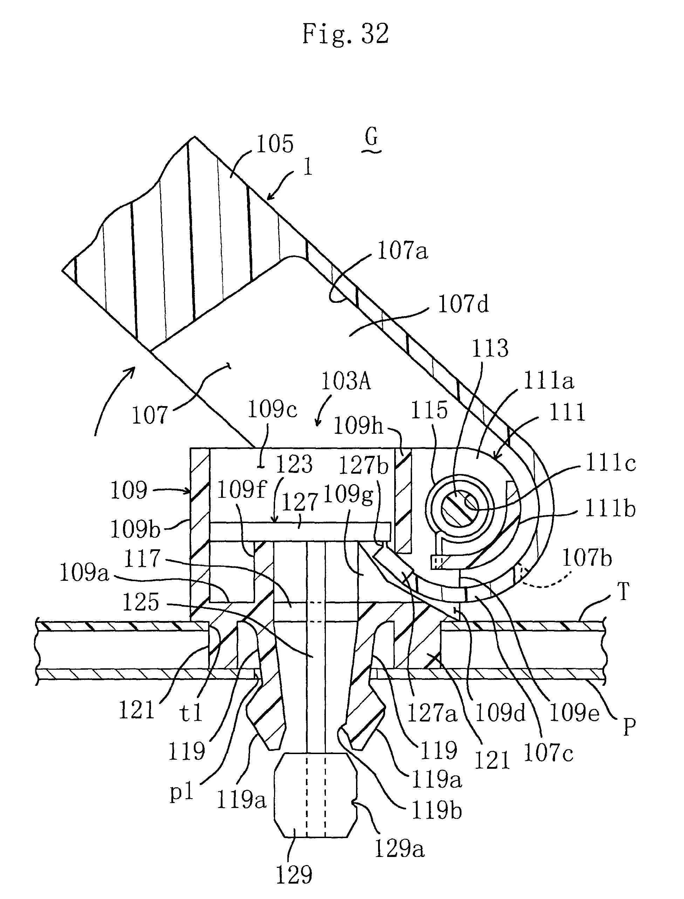

Thereafter, as shown in Figure **32,** the mounts **103A** and **103B** of the assist grip **G** are inserted into the corresponding mounting holes **t1** of the ceiling member **T** to engage the abutment pieces **121** of the mount body **109** to the periphery of the corresponding mounting hole **p1** of the inner panel **P** from the front side thereof, and concurrently the pawls **119a** of the pair of flexible engaging pieces **119** are inserted into the mounting hole **p1.** During the time, since the extension **129** of the locking pin **123** has passed over the pawls **119a** and is retained outside thereof, the flexible engaging pieces **119** are free from the pressing force of the extension **129.** Further, since the distance between the pawls **119a** is narrowed and the rod **125** of the locking pin **123** and the pawls **119a** are set at dimensions capable of passing through the mounting hole **p1** by the inward flexion of the pawls **119a,** the pawls **119a** can be smoothly inserted into the mounting hole **p1** of the inner panel **P.**

Thereafter, as shown in Figure **33,** the grip body **1** is swung to its use position. Through this swing motion, the pusher **107c** of the leg **105** enters inside of the mount body **109** through the entrance **109d** and moves the movement assist piece **127a** of the locking pin **127** in the opposite direction of the insertion of the locking pin **127.** During the time, the inclined surfaces of the raised portions **109g** guides the movement assist piece **127a** of the locking pin **123** for smooth movement and prevents separation of the pusher **107c** from the movement assist piece **127a.**

As a result, the locking pin **123** is moved back opposite to the direction of insertion. Through the backward movement of the locking pin **123,** the extension **129** thereof enters between the flexible engaging pieces **119** and pushes them apart from each other, the locking retention projection **119b** of the flexible engaging piece **119** seats in the locking retention notch **129a** of the extension **129** to retain the extension **129** at the locking position between the pawls **119a,** and the pawls **119a** of the flexible engaging pieces **119** are held engaged on the edge of the mounting hole **p1.**

Then, when the grip body **1** is released, it returns to the retracted position as shown in Figure **29** by the torque of the torsion coil spring **115** and the damping effect. From this point, even when the grip body **1** is swung again to the use position, the pusher **107c** of the leg **105** no longer moves the movement assist piece **127a** of the locking pin **123** in the opposite direction of the insertion of the locking pin **123.** Accordingly, the locking pin **123** neither drops out nor interferes with the swing motion of the grip body **1.**

As can be seen from the above, by simply swinging the grip body **1** to the use position, the extension **129** of the locking pin **123** can automatically be pushed up to the locking position (between the pawls **119a**) to push the flexible engaging pieces **119** apart from each other and engage the flexible engaging pieces **119** on the edge of the mounting hole **p1.** Accordingly, the assist grip **G** can be easily mounted to the inner panel **P** in a single operation. In addition, in order to mount the assist grip **G** to the inner panel **P,** it suffices to prepare the grip body **1** and the mounts **103A** and **103B** with locking pins **123,** which form the assist grip **G,** and other mounting jigs and parts are dispensed with. This presents cost reduction.

In Embodiment 6, engaging pieces for engaging the mount to the inner panel are implementedby the pair of flexible engaging pieces **119** having respective pawls **119a.** Alternatively, one of the engaging pieces may be like flexible engaging piece **119** and the other engaging piece may be a fitting piece having a fitting groove. In this case, each of the mounts **103A, 103B** in which the locking pin **123** has been inserted is inserted into the corresponding mounting hole **t1** of the ceiling member **T,** the abutment piece **121** beside the pawl **119a** is engaged to the periphery of the mounting hole **p1** of the inner panel **P** from the front side thereof, the fitting groove of the fitting piece is fitted onto the edge of the mounting hole **p1** of the inner panel **P,** and in this condition the grip body **1** is swung toward the use position. Thereby, the extension **129** of the locking pin **123** is pushed in between the fitting piece and the flexible engaging piece to engage the pawl **119a** of the flexible engaging piece **119** to the periphery of the mounting hole **p1** of the inner panel **P** from the back side thereof, thereby securing the inner panel **P** in sandwich relation between the end face of the abutment piece **121** and the pawl **119a** and between the both side faces of the fitting groove of the fitting piece.

In Embodiment 6, the locking pin **123** is retained at its locking position (between the pawls **119a**) by seating the locking retention projection **119b** of the pawl **119a** of the flexible engaging piece **119** in the locking retention notch **129a** of the extension **129** of the locking pin **123.** Alternatively, the locking pin **123** may be retained at its locking position (between the pawls **119a**) by providing a retainer for retention of locking having an engaging projection in the cap **127** of the locking pin **123** and engaging the engaging projection of the retainer in an engaging window (locking retention window) formed in the sidewall **109b** of the mount body **109.**

In addition, a recess may be provided in one of abutting end faces of the movement assist piece **127a** of the locking pin **123** and the pusher **107c** of the leg **105** of the grip body **1,** a corresponding projection may be provided in the other end face, both the recess and projection may be fitted with each other. In this case, during the movement of the locking pin **123** opposite in the direction of insertion, the pusher **107c** can be prevented from disengaging from the movement assist piece **127a,** thereby ensuring the movement of the locking pin **123** to the locking position.

In the above embodiments, the retractable assist grips for vehicles are described as examples. However, the present invention is also applicable to assist grips for other purposes.

## Claims

1. A retractable assist grip comprising:
a pair of mounts fixed to a fixed body;
a grip body pivotally mounted for swing motion at legs thereof onto the mounts, respectively; and
urging means, provided between at least one of the legs of the grip body and the corresponding mount, for urging the grip body into swing motion from its use position to its retracted position,
wherein at least one of the pair of mounts includes a fulcrum pin extended integrally from one side thereof, a recess formed coaxially with the fulcrum pin on the opposite side of the mount, and a loose-fit pin extended integrally from the inner bottom toward the opening of the recess and coaxially with the fulcrum pin,
the leg of the grip body is formed with a pin support journaled on the fulcrum pin,
the leg of the grip body is assembled against relative rotation with a spacer rotatably inserted into the recess of the mount and including a pin loose-fitting part for loosely receiving the loose-fit pin therein, and
a viscidity is provided in a space between the outer periphery of the spacer and the inner periphery of the recess of the mount.

2. The retractable assist grip of Claim 1, wherein
the viscidity is also provided in a space between the inner periphery of the pin loose-fitting part of the spacer and the outer periphery of the loose-fit pin of the mount.

3. A retractable assist grip comprising:
a pair of mounts fixed to a fixed body;
a grip body pivotally supported for swing motion at legs thereof onto the mounts, respectively; and
urging means, provided between at least one of the legs of the grip body and the corresponding mount, for urging the grip body into swing motion from its use position to its retracted position,
wherein at least one of the pair of mounts is formed of first and second mounts,
a leg of the grip body is assembled into unitary rotation with a fulcrum pin supported to the first mount,
the grip body is formed with a spacer fitting part formed of a concavity coaxial with the fulcrum pin, the fulcrum pin extending inside the spacer fitting part toward the opening thereof,
the second mount includes a spacer part rotatably fitted into the spacer fitting part and provided with a recess for loosely receiving the fulcrum pin extending inside the spacer fitting part therein, and
a viscidity is provided at least between the outer periphery of the spacer part of the second mount and the inner periphery of the spacer fitting part of the grip body.

4. A retractable assist grip of Claim 1 or 2, wherein
a sealing member is provided in one of a portion of the inner periphery of the recess of the amount in the vicinity of the open end of the recess and a corresponding portion of the outer periphery of the spacer and a sealing surface engaging against the sealing member is provided in the other, the engagement of the sealing member against the sealing surface sealing from the outside at least the space between the outer periphery of the spacer and the inner periphery of the recess of the mount,
the sealing member is placed, when the spacer is inserted into the recess of the mount and the viscidity is filled with at least the space between the outer periphery of the spacer and the inner periphery of the recess of the mount while expelling air from the space, to form a seal with the sealing surface by engagement against the sealing surface with the air in the space substantially fully expelled.

5. The retractable assist grip of Claim 4, wherein
the sealing member is placed, when the spacer is fully inserted into the recess of the mount, on a portion of the sealing surface closer to the opening of the recess than the centre of the sealing surface in a direction of insertion of the sealing member.

6. The retractable assist grip of Claim 1 or 2, wherein
a first restriction is extended on the outer periphery of the spacer so as to be opposed to and spaced a predetermined clearance apart from the inner periphery of the recess of the mount,
a second restriction is extended on the inner periphery of the recess of the mount so as to be opposed to and spaced a predetermined clearance apart from the outer periphery of the spacer, and
the first and second restrictions are placed at positions to allow the swing motion of the grip body between the use position and retracted position.

7. The retractable assist grip of Claim 2, wherein
a third restriction is extended on the outer periphery of the loose-fit pin of the mount so as to be opposed to and spaced a predetermined clearance apart from the inner periphery of the pin loose-fitting part of the spacer,
a fourth restriction is extended on the inner periphery of the pin loose-fitting part of the spacer so as to be opposed to and spaced a predetermined clearance apart from the outer periphery of the loose-fit pin of the mount, and
the third and fourth restrictions are placed at positions to allow the swing motion of the grip body between the use and retracted positions.

8. The retractable assist grip of Claim 1 or 2, wherein
a plurality of support flanges are radially extended in circumferentially equally spaced relation on one of a bottom end portion of the inner periphery of the recess of the mount and the outer periphery of the distal end of the spacer so as to relatively slidably engage the other.

9. A retractable assist grip including an elongated grip body having legs at both lengthwise ends thereof and mounts to which the legs are mounted for swing motion, the grip body being swung between its use and retracted positions with the mounts fixed to a fixed body,
wherein the mount comprises:
a mount body which is provided with a swing support section for supporting the legs for swing motion and abuts on the periphery of a mounting hole of the fixed body from the front side of the fixed body;
a through hole passing through the mount body from front to back thereof;
at least two engaging pieces which are extended from the periphery of the through hole on the back of the mount body and inserted into the mounting hole of fixed body to engage on the edge of the mounting hole; and
a locking pin having an extension at the distal end thereof, the locking pin being inserted into the through hole from the front side of the mount body prior to the mounting of the grip body to the mount so that the extension passes a locking position between the engaging pieces while pushing the engaging pieces apart from each other, the locking pin being restrained against movement opposite to a direction of insertion thereof into the through hole by the distal ends of the engaging pieces narrowed in distance therebetween by the passage of the extension over the locking position so that the extension is retained at a position having passed over the locking position, the locking pin being moved backward opposite to the direction of insertion thereof by the swing motion of the grip body to the use position in a state that the mount body of the mount to which the grip body is mounted is caused to abut on the periphery of the mounting hole of the fixed body from the front side thereof, the backward movement of the locking pin causing the extension to enter again between the engaging pieces and push the engaging pieces apart from each other so that the extension is retained at the locking position thereby holding the engaging pieces in engagement on the edge of the mounting hole.

10. The retractable assist grip of Claim 1, wherein
the mount comprises:
a mount body which is provided with a swing support section for supporting the legs of the grip body for swing motion and abuts on the periphery of a mounting hole of the fixed body from the front side of the fixed body;
a through hole passing through the mount body from front to back thereof;
at least two engaging pieces which are extended from the periphery of the through hole on the back of the mount body and inserted into the mounting hole of fixed body to engage on the edge of the mounting hole; and
a locking pin having an extension at the distal end thereof, the locking pin being inserted into the through hole from the front side of the mount body prior to the mounting of the grip body to the mount so that the extension passes a locking position between the engaging pieces while pushing the engaging pieces apart from each other, the locking pin being restrained against movement opposite to a direction of insertion thereof into the through hole by the distal ends of the engaging pieces narrowed in distance therebetween by the passage of the extension over the locking position so that the extension is retained at a position having passed over the locking position, the locking pin being moved backward opposite to the direction of insertion thereof by the swing motion of the grip body to the use position in a state that the mount body of the mount to which the grip body is mounted is caused to abut on the periphery of the mounting hole of the fixed body from the front side thereof, the backward movement of the locking pin causing the extension to enter again between the engaging pieces and push the engaging pieces apart from each other so that the extension is retained at the locking position thereby holding the engaging pieces in engagement on the edge of the mounting hole.

11. The retractable assist grip of Claim 9 or 10, wherein
a movement assist piece is extended from the root end of the locking pin, and
a pusher is provided at the bottom end of the leg of the grip body so as to abut on the movement assist piece and move the locking pin opposite to the direction of insertion thereof by the swing motion of the grip body to the use position.

12. The retractable assist grip of Claim 1, 2, 3 or 9, wherein the fixed body is a car body panel.

13. A method of mounting a retractable assist grip including an elongated grip body having legs at both lengthwise ends thereof and mounts to which the legs are mounted for swing motion, the grip body being swung between its use and retracted positions with the mounts fixed to a fixed body, the method comprising the steps of:
inserting a locking pin having an extension at the distal end thereof into a through hole of the mount body from the front side thereof so that the extension passes a locking position between at least two engaging pieces extended from the periphery of the through hole on the back of the mount body while pushing the engaging pieces apart from each other, and restraining the locking pin against movement opposite to a direction of insertion thereof into the through hole by the distal ends of the engaging pieces narrowed in distance therebetween by the passage of the extension over the locking position so that the extension is retained at a position having passed over the locking position; and
after mounting the grip body to the mount, swinging the grip body to the use position with the mount body caused to abut on the periphery of the mounting hole of the fixed body from the front side thereof and moving the locking pin opposite to the direction of insertion thereof by the swing motion of the grip body to cause the extension to enter between the engaging pieces and push the engaging pieces apart from each other so that the extension is retained at the locking position thereby holding the engaging pieces in engagement on the edge of the mounting hole.
